# EUROPEAN PATENT APPLICATION

(11) **EP 2 559 515 A1**
(43) Date of publication of application: **20.02.2013**
(21) Application number: 11826976.0
(22) Date of filing: 29.07.2011
(51) Int. Cl.: B23Q 3/15, B23Q 3/154, H01F 7/02

(54) **MAGNET HOLDER INCLUDING A COMBINATION OF A PERMANENT MAGNET AND AN ELECTROMAGNET**

(30) Priority: 20.05.2011 KR 20110048101; 20.09.2010 KR 20100092568
(71) Applicant: Choi, Tae Kwang, Gyeonggi-do 423-050 (KR)
(72) Inventor: Choi, Tae Kwang, Gyeonggi-do 423-050 (KR)
(74) Representative: Syrtsova, Ekaterina
(86) International application number: PCT/KR2011/005627
(87) International publication number: WO 2012/039548

(57) **Abstract**

The present invention relates to a magnetic substance holder, which includes a permanent magnet, a pole piece coupling one of N and S poles of the permanent magnet and having a holding surface, a magnetizable material having an end surface contacting the pole piece, a coil surrounding the magnetizable material, and a control device controlling electric current flowing through the coil to control the magnetization of the magnetizable material. According to the present invention, optimal holding force can be realized for the same area, and the magnetic substance holder can be readily expanded to a module or be miniaturized according to the size of the interior of a device on which the magnet holder is installed, and can be widely applied to various equipment used in the industrial field such as lifts, chucks, locking devices, applied machines, and robots.

## Description

### [Technical Field]

The present invention relates to a magnetic substance holder having a combination of a permanent magnet and an electromagnet, and more particularly, to a magnetic substance holder that controls a flow of magnetic flux using an electromagnet to adjust holding or releasing of a magnetic substance.

### [Background Art]

A permanent magnet workholding device is a device that is used to attach a target made up of a magnetic material such as iron using a magnetic force, and is widely used as an internal device attached to a die clamp of an injection molding machine, a die clamp of a press, a chuck of a machine tool, or the like, nowadays.

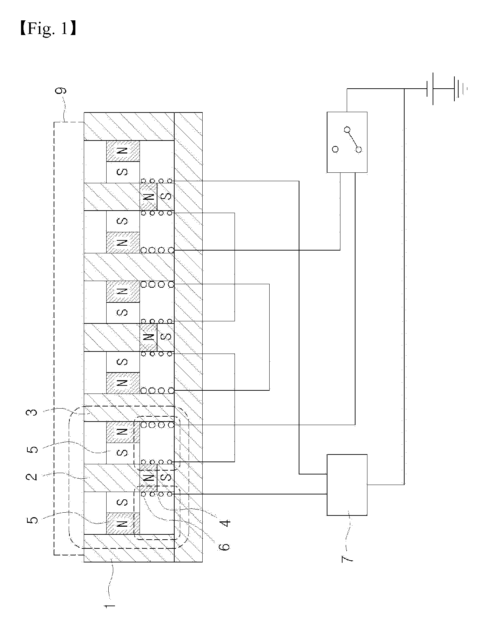

Fig. 1 is a cross-sectional view showing a conventional permanent magnet workholding device, which is disclosed in US Patent No. 4,956,625. Referring to Fig. 1, the conventional workholding device using a permanent magnet includes: a plurality of modules, each of which is made up of a yoke 1, a pole piece 2, an intermediate pole member 3, a primary permanent magnet 4, secondary permanent magnets 5, and a conducting wire 6 wounded around the primary permanent magnet 4; and a high-voltage power supply 7.

In the above configuration, the primary permanent magnet 4 employs an alnico magnet that can be magnetized and demagnetized by applying high current to the conducting wire wound therearound. The alnico magnet is known as a magnet that can be magnetized and demagnetized by the lowest current among the permanent magnets.

The workholding device instantaneously applies high current to the conducting wire 6 wound around the primary permanent magnet 4 located between the pole piece 2 and a base plate of the yoke 1, thereby converting polarity of the primary permanent magnet 4 to hold (fix) or release (unfix) a target 9 as a magnetic substance by means of a magnetic force. The workholding device requires the high current to change the polarity of the primary permanent magnet 4 in order to hold or release the target 9.

For this reason, the workholding device is exposed to a high possibility of safety accidents, is reduced in holding force due to incomplete magnetization depending on a hysteresis phenomenon while repeating magnetization and demagnetization, and is vulnerable to durability due to the generation of heat. Further, the workholding device is difficult to miniaturize due to a big module, is complicated in single structure based on the high current and structure of a high-current supply device, is expensive, and has a limited application range.

### [Disclosure]

### [Technical Problem]

Accordingly, an object of the present invention is to provide a magnetic substance holder capable of providing a simple structure, inexpensive manufacturing cost, and easy miniaturization, and exerting great force of holding a magnetic substance in comparison with size so as to be applied in various fields.

Further, another object of the present invention is to provide a magnetic substance holder having a simple, new structure that requires power only when holding or releasing a magnetic substance and does not require separate supply of power when continuing to hold or release the magnetic substance.

### [Technical Solution]

According to an embodiment of the present invention, there is provided a magnetic substance holder, which includes: a permanent magnet; a pole piece coupled with one of an N pole and an S pole of the permanent magnet, and having a holding face; a magnetizable material disposed such that one end face thereof is in contact with the pole piece; a coil enclosing the magnetizable material; and a control device controlling magnetization of the magnetizable material by controlling electric current flowing through the coil.

Preferably, the control device applies electric current to the coil to form the same pole as the pole of the permanent magnet coupled with the pole piece on one end face of the magnetizable material which abuts on the pole piece, such that the magnetic substance holder holds the magnetic substance to the holding face of the pole piece.

Further, the control device applies electric current to the coil to form the pole different from the pole of the permanent magnet coupled with the pole piece on one end face of the magnetizable material which abuts on the pole piece, such that the magnetic substance holder releases the magnetic substance from the holding face of the pole piece.

On the other hand, according to another embodiment of the present invention, there is provided a magnetic substance holder, which includes: a permanent magnet; a first pole piece coupled to one of an N pole and an S pole of the permanent magnet and including a holding face; a second pole piece coupled to the other of the N pole and the S pole of the permanent magnet and including a holding face; a magnetizable material disposed such that one end face thereof is in contact with the first pole piece and the other end face thereof is in contact with the second pole piece; a coil enclosing the magnetizable material; and a control device controlling magnetization of the magnetizable material by controlling electric current flowing through the coil.

Preferably the control device applies electric current to the coil to form the same pole as the pole of the permanent magnet coupled with the first pole piece on one end face of the magnetizable material which abuts on the first pole piece, such that the magnetic substance holder holds the magnetic substance to the holding faces of the first pole piece and the second pole piece.

Further, the control device interrupts electric current applied to the coil after the magnetic substance is held to the holding faces of the first pole piece and the second pole piece.

Here, the control device applies electric current to the coil to form a pole different from the pole of the permanent magnet coupled with the first pole piece on the one end face of the magnetizable material which abuts on the first pole piece such that the magnetic substance holder releases the magnetic substance from the holding faces of the first pole piece and the second pole piece.

Further, the control device applies to the coil to form the same pole as the pole of the permanent magnet coupled with the first pole piece on one end face of the magnetizable material which abut on the first pole when the magnetic substance is held to the holding faces of the first pole piece and the second pole piece, such that the magnetic substance is more strongly held to the holding faces of the first pole piece and the second pole piece.

On the other hand, according to yet another embodiment of the present invention, there is a magnetic substance holder, which includes: a first permanent magnet; a second permanent magnet; a first pole piece coupled to one of an N pole and an S pole of the first permanent magnet and including a holding face; a second pole piece coupled to pole of the second permanent magnet which is different from the pole of the first permanent magnet coupled with the first pole piece and including a holding face; a magnetizable material disposed such that one end face thereof is in contact with the first pole piece and the other end face thereof is in contact with the second pole piece; a coil enclosing the magnetizable material; and a control device controlling magnetization of the magnetizable material by controlling electric current flowing through the coil.

Preferably, the control device applies electric current to the coil to form the same pole as the pole of the first permanent magnet coupled with the first pole piece on the one end face of the magnetizable material which abuts on the first pole piece such that the magnetic substance holder holds the magnetic substance to the holding faces of the first pole piece and the second pole piece.

Further, the control device interrupts electric current applied to the coil after the magnetic substance is held to the holding faces of the first pole piece and the second pole piece.

Further, the control device applies electric current to the coil to form a pole different from the pole of the first permanent magnet coupled with the first pole piece on the one end face of the magnetizable material which abuts on the first pole piece, such that the magnetic substance holder releases the magnetic substance from the holding faces of the first pole piece and the second pole piece.

Here, the control device interrupt electric current applied to the coil after the magnetic substance is released from the holding faces of the first pole piece and the second pole piece.

Further, the control device applies to the coil to form the same pole as the pole of the first permanent magnet coupled with the first pole piece on one end face of the magnetizable material which abut on the first pole when a substance holder is hold on the holding faces of the first pole piece and the second pole piece, such that the magnetic substance is more strongly held to the holding faces of the first pole piece and the second pole piece.

On the other hand, according to yet another embodiment of the present invention, there is a magnetic substance holder, which includes: a permanent magnet; a first pole piece coupled to one of an N pole and an S pole of the permanent magnet and including a holding face; a second pole piece coupled to the other of the N pole and the S pole of the permanent magnet and including a holding face; a magnetizable material disposed such that one end face thereof is in contact with the first pole piece and the other end face thereof is opposite to the second pole piece with a predetermined gap; a coil enclosing the magnetizable material; and a control device controlling magnetization of the magnetizable material by controlling electric current flowing through the coil.

Preferably, the control device applies electric current to the coil to form a pole different from the pole of the permanent magnet coupled with the first pole piece on the one end face of the magnetizable material which abuts on the first pole piece, such that the magnetic substance holder releases the magnetic substance from the holding faces of the first pole piece and the second pole piece.

Further, the control device applies to the coil to form the same pole as the pole of the permanent magnet coupled with the first pole piece on one end face of the magnetizable material which abut on the first pole such that the magnetic substance is more strongly held to the holding faces of the first pole piece and the second pole piece.

Here, the control device interrupt electric current applied to the coil after the magnetic substance is held to the holding faces of the first pole piece and the second pole piece.

On the other hand, according to yet another embodiment of the present invention, there is a magnetic substance holder, which includes: a first permanent magnet; a second permanent magnet; a first pole piece coupled to one of an N pole and an S pole of the first permanent magnet and including a holding face; a second pole piece coupled to a pole of the second permanent magnet which is different from the pole of the first permanent magnet coupled with the first pole piece and including a holding face; a magnetizable material disposed such that one end face thereof is in contact with the first pole piece and the other end face thereof is opposite to the second pole piece with a predetermined gap; a coil enclosing the magnetizable material; and a control device controlling magnetization of the magnetizable material by controlling electric current flowing through the coil.

Preferably, the control device applies electric current to the coil to form a pole different from the pole of the first permanent magnet coupled with the first pole piece on the one end face of the magnetizable material which abuts on the first pole piece such that the magnetic substance holder releases the magnetic substance from the holding faces of the first pole piece and the second pole piece.

Further, the control device applies electric current to the coil to form the same pole as the pole of the first permanent magnet coupled with the first pole piece on one end face of the magnetizable material which abut on the first pole such that the magnetic substance is more strongly held to the holding faces of the first pole piece and the second pole piece.

Here, the control device interrupt electric current applied to the coil after the magnetic substance is held to the holding faces of the first pole piece and the second pole piece.

On the other hand, according to yet another embodiment of the present invention, there is a magnetic substance holder, which includes: a permanent magnet; a first pole piece coupled to one of an N pole and an S pole of the permanent magnet and including a holding face and an insertion recess; a second pole piece coupled to the other of the N pole and the S pole of the permanent magnet and including a holding face; a magnetizable material allowed to move between the first pole piece and the second pole piece in state that one end face thereof is inserted into the insertion recess in contact with the first pole piece; a coil enclosing the magnetizable material; and a control device controlling magnetization of the magnetizable material by controlling electric current flowing through the coil.

Preferably, the control device applies electric current to the coil to form the same pole as the pole of the permanent magnet coupled with the first pole piece on the one end face of the magnetizable material which abuts on the first pole piece such that the magnetic substance holder holds a magnetic substance to the holding faces of the first pole piece and the second pole piece.

Further, the control device interrupts electric current applied to the coil after the magnetic substance is held to the holding faces of the first pole piece and the second pole piece.

Here, the control device applies electric current to the coil to form a pole different from the pole of the permanent magnet coupled with the first pole piece on the one end face of the magnetizable material which abuts on the first pole piece such that the magnetic substance holder releases the magnetic substance from the holding faces of the first pole piece and the second pole piece.

Further, the control device applies to the coil to form the same pole as the pole of the permanent magnet coupled with the first pole piece on one end face of the magnetizable material which abut on the first pole such that the magnetic substance is more strongly held to the holding faces of the first pole piece and the second pole piece.

Preferably, the control device applies to the coil to form the same pole as the pole of the permanent magnet coupled with the first pole piece on one end face of the magnetizable material which abut on the first pole when the magnetic substance is held to the holding faces of the first pole piece and the second pole piece, such that the magnetic substance is more strongly held to the holding faces of the first pole piece and the second pole piece.

On the other hand, according to yet another embodiment of the present invention, there is a magnetic substance holder, which includes: a first permanent magnet and a second permanent magnet; a first pole piece coupled to one of an N pole and an S pole of the permanent magnet and including a holding face and an insertion recess; a second pole piece coupled to the pole of the second permanent magnet which is different pole from the pole of the first permanent magnet coupled with the first pole piece, and including a holding face; a magnetizable material configured such that the magnetizable material is movable between the first pole piece and the second pole piece in contact with the first pole piece by inserting one end face thereof into the insertion recess; a coil enclosing the magnetizable material; and a control device controlling magnetization of the magnetizable material by controlling electric current flowing through the coil.

Preferably, the control device applies electric current to the coil to form the same pole as the pole of the first permanent magnet coupled with the first pole piece on the one end face of the magnetizable material which abuts on the first pole piece such that the magnetic substance holder holds the magnetic substance to the holding faces of the first pole piece and the second pole piece.

Further, the control device interrupts electric current applied to the coil after the magnetic substance is held to the holding faces of the first pole piece and the second pole piece.

Here, the control device applies electric current to the coil to form a pole different from the pole of the first permanent magnet coupled with the first pole piece on the one end face of the magnetizable material which abuts on the first pole piece such that the magnetic substance holder releases the magnetic substance from the holding faces of the first pole piece and the second pole piece.

Further, the control device interrupts electric current applied to the coil after the magnetic substance is released from the holding faces of the first pole piece and the second pole piece.

Preferably, the control device applies to the coil to form the same pole as the pole of the first permanent magnet coupled with the first pole piece on one end face of the magnetizable material which abut on the first pole when the magnetic substance is held to the holding faces of the first pole piece and the second pole piece, such that the magnetic substance is more strongly held to the holding faces of the first pole piece and the second pole piece.

According to the present inventions, on holding or releasing, changing a path of lines of magnetic force which have been already formed may be accomplished by changing a direction of lines of magnetic force of a permanent magnet in a manner of changing polarity of a magnet on a specific path. Thus, the present invention enables to overcome the limitation of the prior arts, which is to change a path of lines of magnetic force by changing polarity of alnico magnet by using high current. The present inventions use three methods hereinafter.

A first method is to generate holding force without supplying electric current by a permanent magnet module with a minute gap between a pole piece and a yoke, and to connecting the gap between the pole piece and the yoke with a magnetic field of an electromagnet by supplying electric current when releasing. In the first method, a core enables to connect the pole piece and the yoke by moving. A second method is to hold or release a magnetic substance by changing the flows of the lines of magnetic force in a manner of changing a direction of supplying electric current to the electromagnet. A third method is to have a first magnet module and a second magnet module having an electromagnet, and to control a direction of the flows of the lines of magnetic force by supplying electric current to the electromagnet of the second magnet module when removing the holding force between the first magnet module and the second magnet module.

These present inventions may be applied to many different devices because its structure is not restricted by means of using low current. Present inventions are capable of generalizing holding devices having good performances by settling many problems of conventional permanent electromagnet arts, such as high current, incomplete performances, heating, breakdown of the coil, safety, size, high price, narrow application, etc.

In order to accomplish the above object, according to an embodiment of the present invention, there is a magnetic substance holder including combination of a permanent magnet and an electromagnet, which includes: a yoke; a pole piece disposed to space apart from the yoke, and including a holding face for holding a magnetic substance; a permanent magnet disposed that one end face thereof is in contact with the yoke, and the other end thereof is in contact with the pole piece; an electromagnet having a core and a coil enclosing the core wherein the electromagnet is disposed that one end face of the core is in contact with the yoke and the other end face of the core is spaced apart from the pole piece with predetermined gap ; and an electromagnet control device for supplying electric current to the electromagnet. When the magnetic substance is held to the holding face of the pole piece, the electromagnet control device applies electric current to the coil such that the lines of magnetic force may be formed on the core so as to return in the order(or reverse order) of the permanent magnet, the pole piece, the core, the yoke, and the permanent magnet. And when the magnetic substance is released from the holding face of the pole piece, the electromagnet control device applies electric current to the coil such that the lines of magnetic force may be formed on the core so as to return in the order(or reverse order) of the permanent magnet, the pole piece, the core, the yoke, and the permanent magnet.

According to another embodiment of the present invention, there is a magnetic substance holder including combination of a permanent magnet and an electromagnet, which includes: a yoke; a first pole piece and a second pole piece disposed inside the yoke, spaced apart from the yoke, and having a holding face for holding the magnetic substance; an intermediate permanent magnet disposed such that one end face thereof is in contact with the first pole pieces and the other end face thereof is in contact with the second pole piece; an electromagnet having a core and a coil enclosing the core, wherein one end of the core is in contact with the first pole piece and the other end of the core is in contact with the second pole piece; and an electromagnet control device for supplying electric current to the electromagnet. When the magnetic substance is held to the holding faces of the respective pole pieces, the electromagnet control device applies electric current to the coil such that the lines of magnetic force may be formed on the core so as to return in the order(or reverse order) of the intermediate permanent magnet, the first pole piece, the core, the second pole piece, and the intermediate permanent magnet. And when the magnetic substance is released from the holding faces of the respective pole pieces, the electromagnet control device applies electric current to the coil such that the lines of magnetic force may be formed on the core so as to return in the order(or reverse order) of the intermediate permanent magnet, the first pole piece, the core, the second pole piece, and the intermediate permanent magnet.

According to yet another embodiment of the present invention, there is a magnetic substance holder including combination of a permanent magnet and an electromagnet, which includes: a yoke; a pole piece disposed to space apart from the yoke, and including a holding face for holding a magnetic substance; a permanent magnet disposed that one end face thereof is in contact with the yoke, and the other end thereof is in contact with the pole piece; an electromagnet having a core and a coil enclosing the core wherein the electromagnet is disposed that one end face of the core is in contact with the yoke and the other end face of the core is spaced predetermined gap apart from the pole piece with predetermined gap ; and an electromagnet control device for supplying electric current to the electromagnet. The electromagnet control device applies electric current to the coil such that the lines of magnetic force may be formed so as to return in the order(or reverse order) of the permanent magnet, the pole piece, the core, the yoke, and the permanent magnet when the magnetic substance is released from the holding face of the pole piece.

According to yet another embodiment of the present invention, there is a magnetic substance holder including combination of a permanent magnet and an electromagnet, which includes: a yoke; a first and s second pole pieces disposed to space apart from the yoke, and including holding faces for holding a magnetic substance; an intermediate permanent magnet disposed that one end face thereof is in contact with the first pole piece, and the other end thereof is in contact with the second pole piece; an electromagnet having a core and a coil enclosing the core wherein the electromagnet is disposed that one end of the core is in contact with the first pole piece and the other end of the core is spaced a predetermined gap apart from the second pole piece; and an electromagnet control device for supplying electric current to the electromagnet. The electromagnet control device applies electric current to the coil such that the lines of magnetic force may be formed so as to return in the order(or reverse order) of the intermediate permanent magnet, the first pole piece, the core, the second pole piece, and the intermediate permanent magnet when the magnetic substance is released from the holding faces of the first and second pole pieces.

According to yet another embodiment of the present invention, there is a magnetic substance holder including combination of a permanent magnet and an electromagnet, which includes: a first magnet module including: a first yoke; a pole piece disposed inside the first yoke and spaced apart from the first yoke and having a holding face; a permanent magnet disposed between the first yoke and the pole piece that one end thereof is contacted with one face of the pole piece and the other end thereof is contacted with the first yoke; and a second magnet module including: an electromagnet having a core and a coil enclosing the core and provided with a holding face corresponding to the holding face of the pole piece on one end of the core; an electromagnet control device for supplying electric current to the electromagnet. The electromagnet control device applies electric current to the coil such that the lines of magnetic force may be formed on the core so as to return in the order(or reverse order) of the permanent magnet, the pole piece, the core, the first yoke, and the permanent magnet in case that the holding face of the pole piece and the holding face of the core are mutually held, and the electromagnet control device applies electric current to the coil to form the line of magnet force on the core in a direction to where the line of magnetic force is not capable of passing through the core in case that mutual holding between the holding face of the pole piece and the holding face of the core is released.

Details of other embodiments are included in the detailed description and drawings.

### [Advantageous Effects]

According to the embodiments, the magnetic substance holder can realize optimal holding force for the same area, and be readily expanded to a module or be miniaturized according to the size of the interior of a device on which the magnet holder is installed, and be widely applied to various equipment used in the industrial field such as lifts, chucks, locking devices, applied machines, and robots.

Further, the magnetic substance holder can be easily manufactured using components having a simple structure, and provide low manufacturing cost, a low cost of maintenance due to low consumption of power, and safe and easy use.

Further, the magnetic substance holder can be manufactured in a small size due to a simple structure, provide an inexpensive manufacturing cost over performance, be operated at low electric current to reduce the generation of breakdown, enhance the reliability of a product, and be applied to various fields.

In addition, the magnetic substance holder can rapidly control a great flow of magnetic flux using an electromagnet at low electric current in a very easy manner.

### [Description of Drawings]

Fig. 1 is a cross-sectional view showing a conventional permanent magnet workholding device.
Figs. 2 and 3 are explanatory views showing a principle of holding and releasing of a magnetic substance holder according to the present invention.
Figs. 4 to 6 show a magnetic substance holder having one permanent magnet and one pole piece in accordance with the present invention.
Figs. 7 to 10 show a magnetic substance holder having one permanent magnet and two pole pieces in accordance with the present invention.
Figs. 11 to 14 show a magnetic substance holder having two permanent magnets and two pole pieces in accordance with the present invention.
Figs. 15 to 18 show a magnetic substance holder having one permanent magnet and a magnetizable material disposed to have an air gap in accordance with the present invention.
Figs. 19 to 22 show a magnetic substance holder having two permanent magnets and a magnetizable material disposed to have an air gap in accordance with the present invention.
Figs. 23 to 26 show a magnetic substance holder having one permanent magnet and a magnetizable material disposed to be movable in accordance with the present invention.
Figs. 27 to 30 show a magnetic substance holder having two permanent magnets and a magnetizable material disposed to be movable in accordance with the present invention.
Figs. 31 to 52 show embodiments of the magnetic substance holder having a combination of a permanent magnet and an electromagnet, particularly various embodiments in which a magnetic substance is released by converting a flow of lines of magnetic force passing through a permanent magnet, a pole piece, a magnetic substance, and a yoke so as to pass through the permanent magnet, the pole piece, a core, and the yoke using an electromagnet.
Figs. 53 to 66 show embodiments of the magnetic substance holder having a combination of a permanent magnet and an electromagnet, particularly various embodiments in which a magnetic substance is held or released by changing a flow of lines of magnetic force using an electromagnet.
Figs. 67 to 75 shows various embodiments in which the magnetic substance holder includes a first magnet module having a permanent magnet and a second magnet module having an electromagnet, supplies electric current to the electromagnet of the second magnet module when a holding force between the first and second magnet modules is removed, and thus controls flow direction of lines of magnetic force.

### [Mode for Invention]

The above and other advantages and features of the invention and the manner of realizing them will become apparent from the following description taken together with the attached drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The invention is merely defined by the scope of the claims. Further, the terminology used in the description of the invention herein is for describing particular embodiments only and is not intended to be limiting of the invention. As used in the description of the invention and the appended claims, the singular forms "a," "an," and "the" are intended to include the plural for as well, unless the context clearly indicates otherwise. It will be understood that, throughout the specification, unless explicitly stated to the contrary, the term "comprise" and its conjugations such as "comprises" and "comprising" should be interpreted as including any stated components, steps, operations and/or elements but not necessarily excluding other components, steps, operations and/or elements. Also, the detailed descriptions of known function and construction unnecessarily obscuring the subject matter of the present invention will be avoided hereinafter.

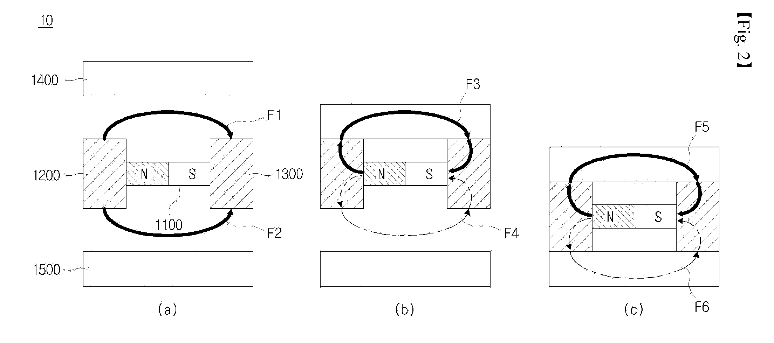

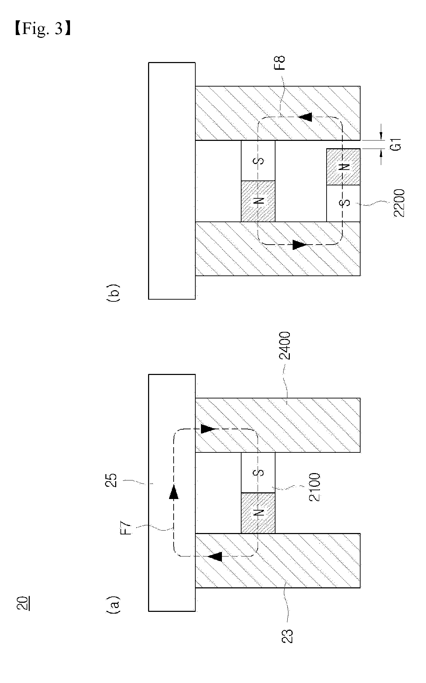

Figs. 2 and 3 are explanatory views showing a principle of holding and releasing of a magnetic substance holder according to the present invention. Figs. 2(a), 2(b) and 2(c) show magnetic flux in a permanent magnet and a magnetic substance, Figs. 3(a) and (b) show magnetic flux in a magnetic circuit having a permanent magnet and a magnetic substance. Hereinafter, the principle of the magnetic substance holder according to the present invention will be described in detail with reference to Figs. 2 and 3.

It is very difficult to define magnetism. A source of the magnetism may be regarded as hole electrons that rotate around a proton in an atomic nucleus including an atom of a ferromagnetic substance. The electrons rotate around the atomic nucleus to generate a flow of the electrons. Thereby, magnetic energy is generated.

Referring to Fig. 2(a), a magnetic circuit 1000 includes a permanent magnet 1100, an N pole piece 1200, and an S pole piece 1300. When first and second ferromagnetic substances 1400 and 1500 are spaced a predetermined distance apart from the magnetic circuit 1000, magnetic flux is formed as denoted by F1 and F2. Here, each of the N pole piece 1200, the S pole piece 1300, the first ferromagnetic substance 1400, and the second ferromagnetic substance 1500 preferably has thickness and area of a predetermined value or more.

Referring to Fig. 2(b), the first ferromagnetic substance 1400 is in contact with one end of the magnetic circuit 1000. The magnetic flux has the property of intending to pass through a ferromagnetic substance rather than a paramagnetic substance such as air. Thus, most of the magnetic flux is formed to pass through the first ferromagnetic substance 1400 as denoted by F3, and extremely insignificant magnetic flux is formed at the other end of the magnetic circuit as denoted by F4.

Referring to Fig. 2(c), the first ferromagnetic substance 1400 comes into contact with one end of the magnetic circuit 1000 first, and then the second ferromagnetic substance 1500 comes into contact with the other end of the magnetic circuit 1000. Here, most of the magnetic flux is formed to pass through the first ferromagnetic substance 1400 that comes into contact ahead as denoted by F5, and extremely insignificant magnetic flux is formed at the second ferromagnetic substance 1500 as denoted by F6.

Thus, when the first ferromagnetic substance 1400 comes into contact with one end of the magnetic circuit 1000, the magnetic circuit 1000 holds the first ferromagnetic substance 1400. Then, the second ferromagnetic circuit 1500 comes into contact with the other end of the magnetic circuit 1000, the magnetic circuit 1000 holds the second ferromagnetic circuit 1500 with extremely insignificant force, or hardly holds the second ferromagnetic circuit 1500.

Fig. 3 shows magnetic flux in a magnetic circuit 2000. Fig. 3(a) shows magnetic flux when a ferromagnetic substance is held to a magnetic circuit, and Fig. 3(b) shows magnetic flux at a ferromagnetic substance and a magnet having a minute air gap G1.

Referring to Fig. 3, the magnetic circuit 2000 is configured so that one of N and S poles of a first permanent magnet 2100 is contacted with a first pole piece 2300, and so that the other pole of the first permanent magnet 2100 coupled with the first pole piece 2300 is coupled with a second pole piece 2400. The term "to be coupled" used herein means to be contacted or disposed with a predetermined air gap. Here, when a magnetic substance 2500 is coupled to the first and second pole pieces 2300 and 2400 of the magnetic circuit 2000, magnetic flux of the magnetic circuit 2000 is formed as denoted by F7. Thus, the magnetic circuit 2000 holds the magnetic substance 2500.

Referring to Fig. 3(b), after the magnetic flux as denoted by F7 of Fig. 3(a) is formed, the first pole piece 2300 is coupled to a magnetic pole of a second permanent magnet 2200 which is different from the magnetic pole of the first permanent magnet 2100 coupled to the first pole piece 2300, and the second pole piece 2400 is coupled to the other magnetic pole of the second permanent magnet 2200 which is the same as the magnetic pole of the first permanent magnet 2100.

Meanwhile, the magnetic flux has the property of intending to pass through a permanent magnet (or an electromagnet) rather than a magnetic substance. Further, the magnetic flux has the property of intending to pass through a permanent magnet (or an electromagnet) having a minute air gap rather than a magnetic substance. Thus, the magnetic flux of the magnetic circuit 2000 in Fig. 3(b) is formed as denoted by F8. Accordingly, the magnetic circuit 2000 releases the magnetic substance 2500.

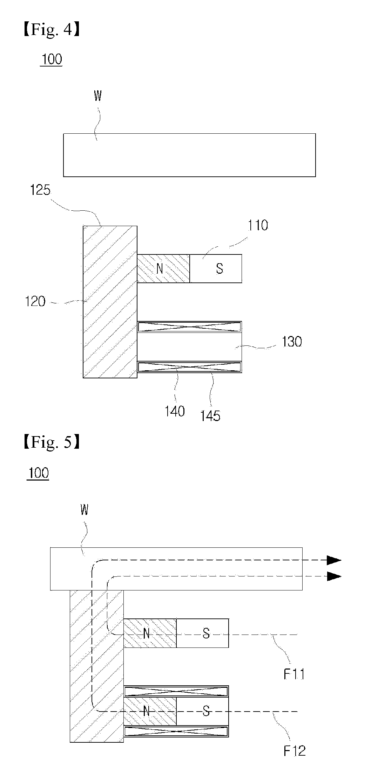

Figs. 4 to 6 show a magnetic substance holder having one permanent magnet and one pole piece in accordance with the present invention.

Referring to Fig. 4, a magnetic substance holder 100 according to an embodiment of the present invention includes a permanent magnet 110, a pole piece 120, a magnetizable material 130, a coil 140, and a control device (not shown).

The permanent magnet 110 is configured so that one of N and S poles thereof is coupled with the pole piece 120. The term "to be coupled" used herein means that the permanent magnet 110 is in contact with the pole piece 120 or is disposed apart from the pole piece 120 with a predetermined air gap. Alternatively, a paramagnetic substance may be disposed in the predetermined air gap between the permanent magnet 110 and the pole piece 120.

The pole piece 120 is coupled to one of the N and S poles of the permanent magnet 110, and includes a holding face 125.

The magnetizable material 130 is disposed so that one end face thereof is in contact with the pole piece 120. The pole piece 120 and the magnetizable material 130 are preferably formed of a ferromagnetic substance such as iron, cobalt, nickel, and an alloy thereof.

The coil 140 encloses the magnetizable material 130. Here, the coil 140 is preferably enclosed with a bobbin 145 that is a nonconductor.

The control device controls electric current flowing through the coil 140, and the resulting magnetization of the magnetizable material 130. That is, the control device controls the magnetization of the magnetizable material 130 to hold or release a magnetic substance W to or from the holding face 125 of the pole piece.

Referring to FIG. 5, the control device applies electric current to the coil 140 such that the same pole as the pole of the permanent magnet 110 coupled with the pole piece 120 is formed on one end face of the magnetizable material 130 which abuts on the pole piece 120. Here, magnetic flux is formed so as to pass through the permanent magnet 110 and the magnetic substance W as denoted by F11, and to pass through the magnetizable material 130 and the magnetic substance W as denoted by F12. Thus, the magnetic substance holder 100 according to the present invention holds the magnetic substance W to the holding face 125 of the pole piece.

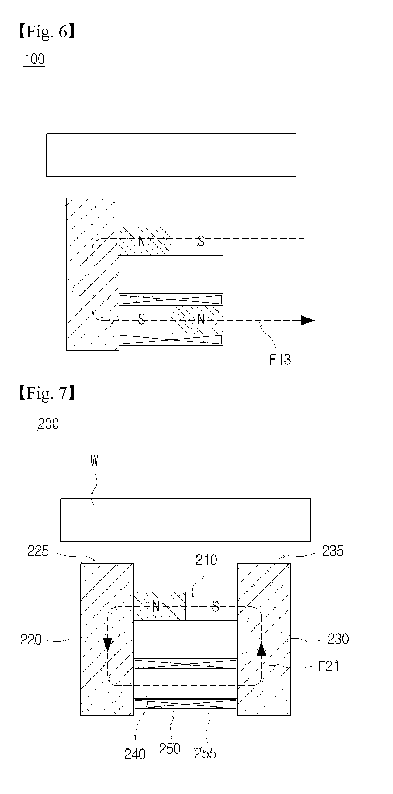

Referring to FIG. 6, the control device applies electric current to the coil 140 such that a pole different from the pole of the permanent magnet 110 coupled with the pole piece 120 is formed on one end face of the magnetizable material 130 which abuts on the pole piece 120. Here, magnetic flux is formed so as to pass through the permanent magnet 110 and the magnetizable material 130 as denoted by F13. Thus, the magnetic substance holder 100 releases the magnetic substance W from the holding face 125 of the pole piece.

Figs. 7 to 10 show a magnetic substance holder having one permanent magnet and two pole pieces in accordance with the present invention.

Referring to Fig. 7, a magnetic substance holder 200 according to another embodiment of the present invention includes a permanent magnet 210, a first pole piece 220, a second pole piece 230 a magnetizable material 240, a coil 250, and a control device (not shown).

The permanent magnet 210 is configured so that one of N and S poles thereof is coupled with the first pole piece 220. Further, the permanent magnet 210 is configured so that the other of the N and S poles thereof is coupled with the second pole piece 230.

The first pole piece 220 is coupled to one of the N and S poles of the permanent magnet 210, and includes a holding face 225.

The second pole piece 230 is coupled to the other of the N and S poles of the permanent magnet 210, and includes a holding face 235. For example, when the first pole piece 220 is coupled to the N pole of the permanent magnet 210, the second pole piece 230 is coupled to the S pole of the permanent magnet 210.

The magnetizable material 240 is disposed so that one end face thereof is in contact with the first pole piece 220 and the other end face thereof is in contact with the second pole piece 230. The first pole piece 220, the second pole piece 230, and the magnetizable material 240 are preferably formed of a ferromagnetic substance such as iron, cobalt, nickel, and an alloy thereof.

The coil 250 encloses the magnetizable material 240. Here, the coil 250 is preferably enclosed with a bobbin 255 that is a nonconductor.

The control device controls electric current flowing through the coil 250 and the resulting magnetization of the magnetizable material 240. That is, the control device controls the magnetization of the magnetizable material 240 to hold or release a magnetic substance W to or from the holding faces 225 and 235 of the first and second pole pieces.

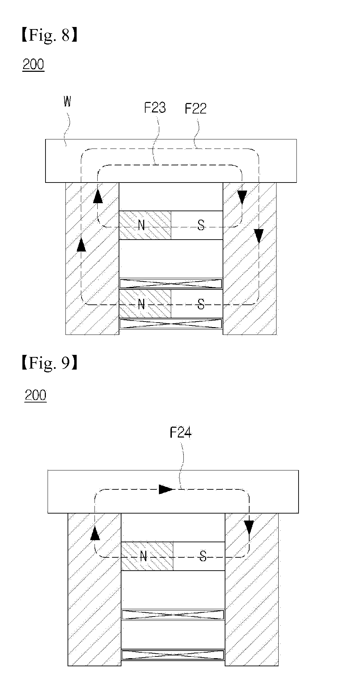

Referring to Fig. 8, the control device applies electric current to the coil 250 such that the same pole as the pole of the permanent magnet 210 coupled with the first pole piece 220 is formed on one end face of the magnetizable material 240 which abuts on the first pole piece 220. For example, when the N pole of the permanent magnet 210 is coupled to the first pole piece 220, and when the S pole of the permanent magnet 210 is coupled to the second pole piece 230, the electric current is applied to the coil 250 such that the N pole is formed on one end face of the magnetizable material 240 which abuts on the first pole piece 220.

Here, magnetic flux is formed so as to pass through the permanent magnet 210 and the magnetic substance W as denoted by F23, and to pass through the magnetizable material 240 and the magnetic substance W as denoted by F22. Thus, the magnetic substance holder 200 according to the present invention holds the magnetic substance W to the holding faces 225 and 235 of the first and second pole pieces.

Referring to Fig. 9, when the magnetic substance W is held to the holding faces 225 and 235 of the first and second pole pieces, the control device interrupts the electric current applied to the coil 250. Here, magnetic flux is formed so as to pass through the permanent magnet 210 and the magnetic substance W as denoted by F24.

Thus, the magnetic substance holder 200 according to the present invention holds the magnetic substance W even when no power is supplied after the magnetic substance W is held. In this way, the magnetic substance holder 200 of the present invention requires a supply of power only when holding the magnetic substance W, and does not require a supply of power during holding of the magnetic substance W, so that the cost of maintenance is lowered.

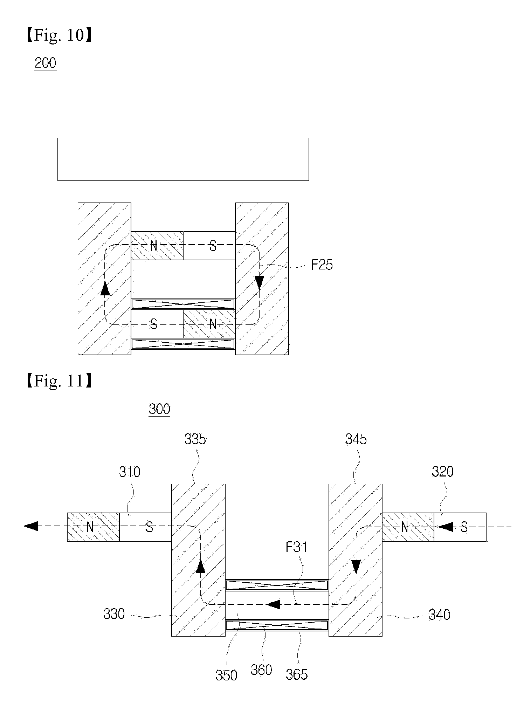

Referring to Fig. 10, when the magnetic substance W is held to the holding faces 225 and 235 of the first and second pole pieces, the control device applies electric current applied to the coil 250 such that a pole different from the pole of the permanent magnet 210 coupled with the first pole piece 220 is formed on one end face of the magnetizable material 240 which abuts on the first pole piece 220. For example, when the N pole of the permanent magnet 210 is coupled to the first pole piece 220, and when the S pole of the permanent magnet 210 is coupled to the second pole piece 230, the electric current is applied to the coil 250 such that the S pole is formed on one end face of the magnetizable material 240 which abuts on the first pole piece 220.

Here, magnetic flux is formed so as to pass through the permanent magnet 210 and the magnetic substance W as denoted by F25. Thus, the magnetic substance holder 200 according to the present invention releases the magnetic substance W from the holding faces 225 and 235 of the first and second pole pieces.

Referring to Fig. 7 again, after the magnetic substance W is released from the holding faces 225 and 235 of the first and second pole pieces, the control device interrupts the electric current applied to the coil 250. Here, magnetic flux is formed so as to pass through the permanent magnet 210 and the magnetic substance W as denoted by F21. Thus, the magnetic substance holder 200 according to the present invention continues to release the magnetic substance W even when no power is supplied after the magnetic substance W is released. Accordingly, the magnetic substance holder 200 of the present invention requires a supply of power only when releasing the magnetic substance W, and does not require a supply of power during releasing of the magnetic substance W, so that the cost of maintenance is lowered.

Referring to Fig. 8 again, when the magnetic substance W is held to the holding faces 225 and 235 of the first and second pole pieces, the control device applies electric current to the coil 250 such that the same pole as the pole of the permanent magnet 210 coupled with the first pole piece 220 is formed on one end face of the magnetizable material 240 which abuts on the first pole piece 220. For example, when the N pole of the permanent magnet 210 is coupled to the first pole piece 220, and when the S pole of the permanent magnet 210 is coupled to the second pole piece 230, the electric current is applied to the coil 250 such that the N pole is formed on one end face of the magnetizable material 240 which abuts on the first pole piece 220.

Here, magnetic flux is formed so as to pass through the magnetizable material 240 and the magnetic substance W as denoted by F22, and is added to the previously formed magnetic flux as denoted by F23. That is, as the entire magnetic flux increases, the magnetic substance W is more strongly held to the magnetic substance holder 200 according to the present invention.

Figs. 11 to 14 show a magnetic substance holder having two permanent magnets and two pole pieces in accordance with the present invention.

Referring to Fig. 11, a magnetic substance holder 300 according to yet another embodiment of the present invention includes a first permanent magnet 310, a second permanent magnet 320, a first pole piece 330, a second pole piece 340 a magnetizable material 350, a coil 360, and a control device (not shown).

The first permanent magnet 310 is configured so that one of N and S poles thereof is coupled with the first pole piece 330.

The second permanent magnet 320 is configured so that its pole different from the pole of the first permanent magnet 310 coupled with the first pole piece 330 is coupled with the second pole piece 340.

The first pole piece 330 is coupled to one of the N and S poles of the permanent magnet 310, and includes a holding face 335.

The second pole piece 340 is coupled to the pole of the second permanent magnet 320 which is different from the pole of the first permanent magnet 310 coupled with the first pole piece 330, and includes a holding face 345. For example, when the first pole piece 330 is coupled to the S pole of the first permanent magnet 310, the second pole piece 340 is coupled to the N pole of the second permanent magnet 320.

The magnetizable material 350 is disposed so that one end face thereof is in contact with the first pole piece 330, and the other end face thereof is in contact with the second pole piece 340. The first pole piece 330, the second pole piece 340, and the magnetizable material 350 are preferably formed of a ferromagnetic substance such as iron, cobalt, nickel, and an alloy thereof.

The coil 360 encloses the magnetizable material 350. Here, the coil 360 is preferably enclosed with a bobbin 365 that is a nonconductor.

The control device controls electric current flowing through the coil 360 and the resulting magnetization of the magnetizable material 350. That is, the control device controls the magnetization of the magnetizable material 350 to hold or release a magnetic substance W to or from the holding faces 335 and 345 of the first and second pole pieces.

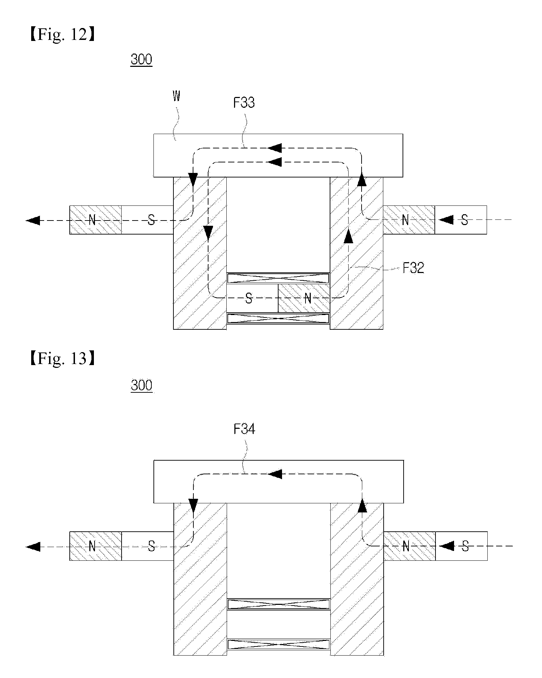

Referring to Fig. 12, the control device applies electric current to the coil 360 such that the same pole as the pole of the first permanent magnet 310 coupled with the first pole piece 330 is formed on one end face of the magnetizable material 350 which abuts on the first pole piece 330. For example, when the S pole of the first permanent magnet 310 is coupled to the first pole piece 330, and when the N pole of the second permanent magnet 310 is coupled to the second pole piece 340, the electric current is applied to the coil 360 such that the S pole is formed on one end face of the magnetizable material 350 which abuts on the first pole piece 340.

Here, magnetic flux is formed so as to pass through the second permanent magnet 320, the magnetic substance W, and the first permanent magnet 310 as denoted by F33, and to pass through the magnetizable material 350 and the magnetic substance W as denoted by F32. Thus, the magnetic substance holder 300 according to the present invention holds the magnetic substance W to the holding faces 335 and 345 of the first and second pole pieces.

Referring to Fig. 13, when the magnetic substance W is held to the holding faces 335 and 345 of the first and second pole pieces, the control device interrupts the electric current applied to the coil 360. Here, magnetic flux is formed so as to pass through the second permanent magnet 320, the magnetic substance W, and the first permanent magnet 310 as denoted by F34.

Thus, the magnetic substance holder 300 according to the present invention holds the magnetic substance W even when no power is supplied after the magnetic substance W is held. In this way, the magnetic substance holder 300 of the present invention requires a supply of power only when holding the magnetic substance W, and does not require a supply of power during holding of the magnetic substance W, so that the cost of maintenance is lowered.

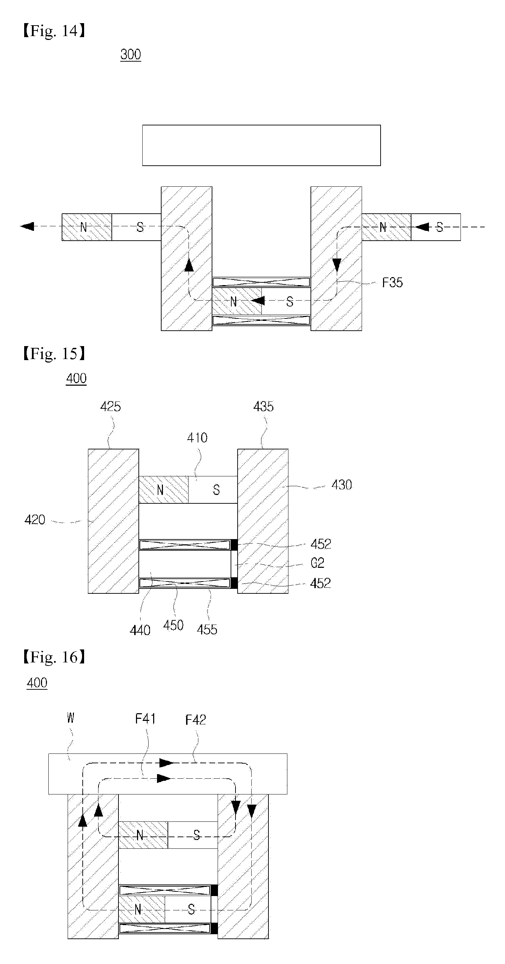

Referring to Fig. 14, when the magnetic substance W is held to the holding faces 335 and 345 of the first and second pole pieces, the control device applies electric current applied to the coil 360 such that a pole different from the pole of the first permanent magnet 310 coupled with the first pole piece 330 is formed on one end face of the magnetizable material 350 which abuts on the first pole piece 330. For example, when the S pole of the first permanent magnet 310 is coupled to the first pole piece 330, and when the N pole of the second permanent magnet 320 is coupled to the second pole piece 340, the electric current is applied to the coil 360 such that the N pole is formed on one end face of the magnetizable material 350 which abuts on the first pole piece 330.

Here, magnetic flux is formed so as to pass through the second permanent magnet 320, the magnetizable material 350, and the first permanent magnet 310 as denoted by F35. Thus, the magnetic substance holder 300 according to the present invention releases the magnetic substance W from the holding faces 335 and 345 of the first and second pole pieces.

Referring to Fig. 11 again, after the magnetic substance W is released from the holding faces 335 and 345 of the first and second pole pieces, the control device interrupts the electric current applied to the coil 360. Here, magnetic flux is formed so as to pass through the second permanent magnet 320, the magnetizable material 240, and the first permanent magnet 310 as denoted by F31. Thus, the magnetic substance holder 300 according to the present invention continues to release the magnetic substance W even when no power is supplied after the magnetic substance W is released. Accordingly, the magnetic substance holder 300 of the present invention requires a supply of power only when releasing the magnetic substance W, and does not require a supply of power during releasing of the magnetic substance W, so that the cost of maintenance is lowered.

Referring to Fig. 12 again, when the magnetic substance W is held to the holding faces 335 and 345 of the first and second pole pieces, the control device applies electric current to the coil 360 such that the same pole as the pole of the first permanent magnet 310 coupled with the first pole piece 330 is formed on one end face of the magnetizable material 350 which abuts on the first pole piece 330. For example, when the S pole of the first permanent magnet 320 is coupled to the first pole piece 340, and when the N pole of the second permanent magnet 320 is coupled to the second pole piece 340, the electric current is applied to the coil 360 such that the S pole is formed on one end face of the magnetizable material 350 which abuts on the first pole piece 330.

Here, magnetic flux is formed so as to pass through the magnetizable material 350 and the magnetic substance W as denoted by F32, and is added to the previously formed magnetic flux as denoted by F33. That is, as the entire magnetic flux increases, the magnetic substance W is more strongly held to the magnetic substance holder 300 according to the present invention.

Figs. 15 to 18 show a magnetic substance holder having one permanent magnet and a magnetizable material disposed to have an air gap in accordance with the present invention.

Referring to Fig. 15, a magnetic substance holder 400 according to another embodiment of the present invention includes a permanent magnet 410, a first pole piece 420, a second pole piece 430 a magnetizable material 440, a coil 450, and a control device (not shown).

The permanent magnet 410 is configured so that one of N and S poles thereof is coupled with the first pole piece 420. Further, the permanent magnet 410 is configured so that the other of the N and S poles thereof is coupled with the second pole piece 430.

The first pole piece 420 is coupled to one of the N and S poles of the permanent magnet 410, and includes a holding face 425.

The second pole piece 430 is coupled to the other of the N and S poles of the permanent magnet 410, and includes a holding face 435. For example, when the first pole piece 420 is coupled to the N pole of the permanent magnet 410, the second pole piece 430 is coupled to the S pole of the permanent magnet 410.

The magnetizable material 440 is disposed so that one end face thereof is in contact with the first pole piece 420, and the other end face thereof is opposite to the second pole piece 430 with a predetermined air gap G2. The air gap G2 between the magnetizable material 440 and the second pole piece 430 has such a size that magnetic flux coming out of the magnetizable material 440 can move to the second pole piece 430 when power is supplied to the coil 450 and thus the magnetizable material 440 is magnetized.

The first pole piece 420, the second pole piece 430, and the magnetizable material 440 are preferably formed of a ferromagnetic substance such as iron, cobalt, nickel, and an alloy thereof.

The coil 450 encloses the magnetizable material 440. Here, the coil 450 is preferably enclosed with a bobbin 455 that is a nonconductor.

A spacer member 452 is disposed between the coil 450 and the second pole piece 430, and supports the magnetizable material 440 apart from the second pole piece 430. The spacer member 452 may be formed of a variety of materials such as plastic that is not influenced by a magnetic field. Of course, the spacer member 452 may be omitted. In this case, an end of the bobbin 455 is in contact with a side of the second pole piece 430.

The control device controls electric current flowing through the coil 450 and the resulting magnetization of the magnetizable material 440. That is, the control device controls the magnetization of the magnetizable material 440 to hold or release a magnetic substance W to or from the holding faces 425 and 535 of the first and second pole pieces.

Referring to Fig. 16, when the magnetic substance W is held to the holding faces 425 and 435 of the first and second pole pieces, the control device applies electric current to the coil 450 such that the same pole as the pole of the permanent magnet 410 coupled with the first pole piece 420 is formed on one end face of the magnetizable material 440 which abuts on the first pole piece 420. For example, when the N pole of the permanent magnet 410 is coupled to the first pole piece 420, and when the S pole of the permanent magnet 410 is coupled to the second pole piece 430, the electric current is applied to the coil 450 such that the N pole is formed on one end face of the magnetizable material 440 which abuts on the first pole piece 420.

Here, magnetic flux is formed so as to pass through the magnetizable material 440 and the magnetic substance W as denoted by F42, and is added to the previously formed magnetic flux as denoted by F41. Thus, as the entire magnetic flux increases, the magnetic substance W is more strongly held to the magnetic substance holder 400 according to the present invention.

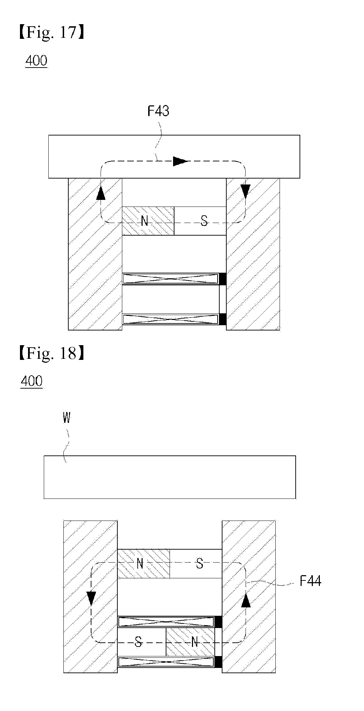

Referring to Fig. 17, when the magnetic substance W is held to the holding faces 425 and 435 of the first and second pole pieces, the control device interrupts the electric current applied to the coil 450. Here, magnetic flux is formed so as to pass through the permanent magnet 410 and the magnetic substance W as denoted by F43.

Thus, the magnetic substance holder 400 according to the present invention holds the magnetic substance W even when no power is supplied after the magnetic substance W is held. In this way, the magnetic substance holder 400 of the present invention requires a supply of power only when holding the magnetic substance W, and does not require a supply of power during holding of the magnetic substance W, so that the cost of maintenance is lowered.

Referring to Fig. 18, when the magnetic substance W is held to the first and second pole pieces 425 and 435, the control device applies electric current applied to the coil 450 such that a pole different from the pole of the permanent magnet 410 coupled with the first pole piece 420 is formed on one end face of the magnetizable material 440 which abuts on the first pole piece 420. For example, when the N pole of the permanent magnet 410 is coupled to the first pole piece 420, and when the S pole of the permanent magnet 410 is coupled to the second pole piece 430, the electric current is applied to the coil 450 such that the S pole is formed on one end face of the magnetizable material 440 which abuts on the first pole piece 420.

Here, magnetic flux is formed so as to pass through the permanent magnet 410 and the magnetizable material 440 as denoted by F44. Thus, the magnetic substance holder 400 according to the present invention releases the magnetic substance W from the holding faces 425 and 435 of the first and second pole pieces.

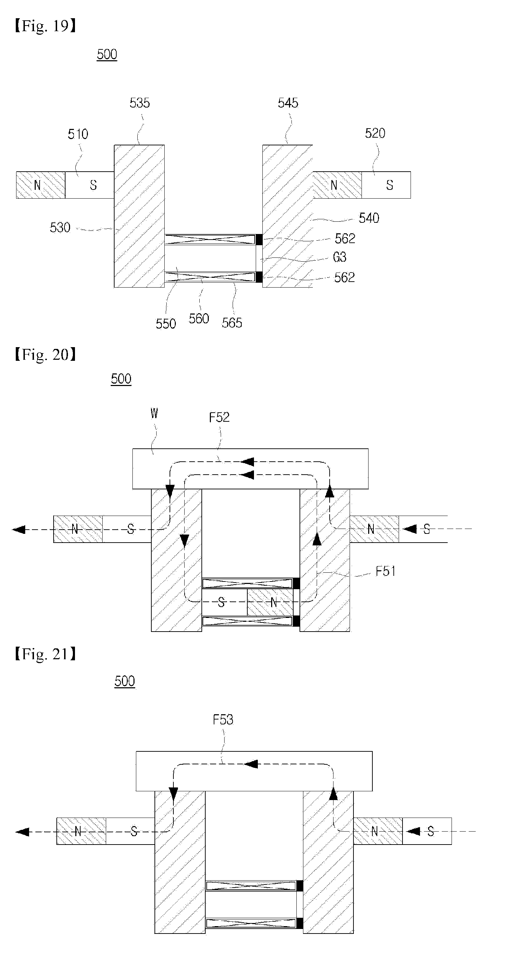

Figs. 19 to 22 show a magnetic substance holder having two permanent magnets and a magnetizable material disposed to have an air gap in accordance with the present invention.

Referring to Fig. 19, a magnetic substance holder 500 according to yet another embodiment of the present invention includes a first permanent magnet 510, a second permanent magnet 520, a first pole piece 530, a second pole piece 540 a magnetizable material 550, a coil 560, and a control device (not shown).

The first permanent magnet 510 is configured so that one of N and S poles thereof is coupled with the first pole piece 530.

The second permanent magnet 520 is configured so that its pole different from the pole of the first permanent magnet 510 coupled with the first pole piece 530 is coupled with the second pole piece 540.

The first pole piece 530 is coupled to one of the N and S poles of the permanent magnet 510, and includes a holding face 535.

The second pole piece 540 is coupled to the pole of the second permanent magnet 520 which is different from the pole of the first permanent magnet 510 coupled with the first pole piece 530, and includes a holding face 545. For example, when the first pole piece 530 is coupled to the S pole of the first permanent magnet 510, the second pole piece 540 is coupled to the N pole of the second permanent magnet 520.

The magnetizable material 550 is disposed so that one end face thereof is in contact with the first pole piece 530, and the other end face thereof is opposite to the second pole piece 540 with a predetermined air gap G2. The air gap G2 between the magnetizable material 550 and the second pole piece 540 has such a size that magnetic flux coming out of the magnetizable material 550 can move to the second pole piece 540 when power is supplied to the coil 560 and thus the magnetizable material 550 is magnetized.

The first pole piece 530, the second pole piece 540, and the magnetizable material 550 are preferably formed of a ferromagnetic substance such as iron, cobalt, nickel, and an alloy thereof.

The coil 560 encloses the magnetizable material 550. Here, the coil 560 is preferably enclosed with a bobbin 565 that is a nonconductor.

A spacer member 562 is disposed between the coil 560 and the second pole piece 540, and supports the magnetizable material 550 apart from the second pole piece 540. The spacer member 562 may be formed of a variety of materials such as plastic that is not influenced by a magnetic field. Of course, the spacer member 652 may be omitted. In this case, an end of the bobbin 565 is in contact with a side of the second pole piece 540.

The control device controls electric current flowing through the coil 560 and the resulting magnetization of the magnetizable material 550. That is, the control device controls the magnetization of the magnetizable material 550 to hold or release a magnetic substance W to or from the holding faces 535 and 545 of the first and second pole pieces.

Referring to Fig. 20, the control device applies electric current to the coil 560 such that the same pole as the pole of the first permanent magnet 510 coupled with the first pole piece 530 is formed on one end face of the magnetizable material 550 which abuts on the first pole piece 530. For example, when the S pole of the first permanent magnet 510 is coupled to the first pole piece 530, and when the N pole of the second permanent magnet 510 is coupled to the second pole piece 540, the electric current is applied to the coil 560 such that the S pole is formed on one end face of the magnetizable material 550 which abuts on the first pole piece 540.

Here, magnetic flux is formed so as to pass through the second permanent magnet 520, the magnetic substance W, and the first permanent magnet 510 as denoted by F52, and to pass through the magnetizable material 550 and the magnetic substance W as denoted by F51. Thus, the magnetic substance holder 500 according to the present invention holds the magnetic substance W to the holding faces 535 and 545 of the first and second pole pieces.

Referring to Fig. 21, when the magnetic substance W is held to the holding faces 535 and 545 of the first and second pole pieces, the control device interrupts the electric current applied to the coil 560. Here, magnetic flux is formed so as to pass through the second permanent magnet 520, the magnetic substance W, and the first permanent magnet 510 as denoted by F53.

Thus, the magnetic substance holder 500 according to the present invention holds the magnetic substance W even when no power is supplied after the magnetic substance W is held. In this way, the magnetic substance holder 500 of the present invention requires a supply of power only when holding the magnetic substance W, and does not require a supply of power during holding of the magnetic substance W, so that the cost of maintenance is lowered.

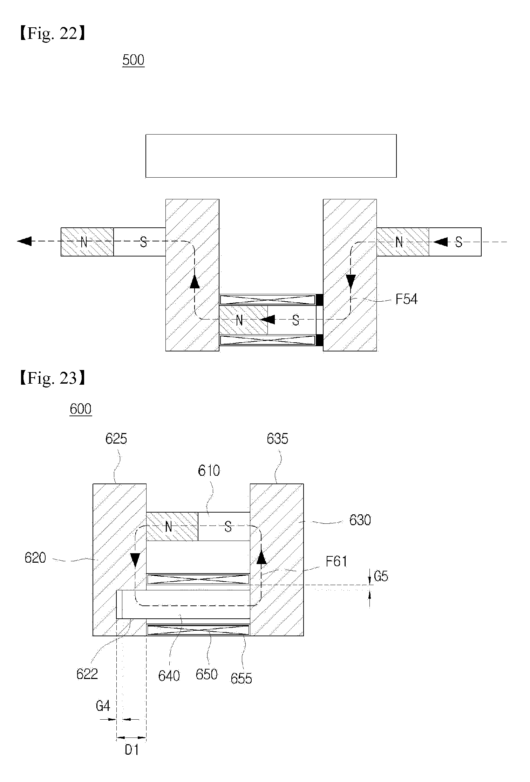

Referring to Fig. 22, when the magnetic substance W is held to the holding faces 535 and 545 of the first and second pole pieces, the control device applies electric current applied to the coil 560 such that a pole different from the pole of the first permanent magnet 510 coupled with the first pole piece 530 is formed on one end face of the magnetizable material 550 which abuts on the first pole piece 530. For example, when the S pole of the first permanent magnet 510 is coupled to the first pole piece 530, and when the N pole of the second permanent magnet 520 is coupled to the second pole piece 540, the electric current is applied to the coil 560 such that the N pole is formed on one end face of the magnetizable material 550 which abuts on the first pole piece 530.

Here, magnetic flux is formed so as to pass through the second permanent magnet 520, the magnetizable material 550, and the first permanent magnet 510 as denoted by F54. Thus, the magnetic substance holder 500 according to the present invention releases the magnetic substance W from the holding faces 535 and 545 of the first and second pole pieces.

Referring to Fig. 20 again, when the magnetic substance W is held to the holding faces 535 and 545 of the first and second pole pieces, the control device applies electric current to the coil 560 such that the same pole as the pole of the first permanent magnet 510 coupled with the first pole piece 530 is formed on one end face of the magnetizable material 550 which abuts on the first pole piece 530. For example, when the S pole of the first permanent magnet 520 is coupled to the first pole piece 540, and when the N pole of the second permanent magnet 520 is coupled to the second pole piece 540, the electric current is applied to the coil 560 such that the S pole is formed on one end face of the magnetizable material 550 which abuts on the first pole piece 530.

Here, magnetic flux is formed so as to pass through the magnetizable material 550 and the magnetic substance W as denoted by F51, and is added to the previously formed magnetic flux as denoted by F52. That is, as the entire magnetic flux increases, the magnetic substance W is more strongly held to the magnetic substance holder 500 according to the present invention.

Figs. 23 to 26 show a magnetic substance holder having one permanent magnet and a magnetizable material disposed to be movable in accordance with the present invention.

Referring to Fig. 23, a magnetic substance holder 600 according to yet another embodiment of the present invention includes a permanent magnet 610, a first pole piece 620, a second pole piece 630 a magnetizable material 640, a coil 650, and a control device (not shown).

The permanent magnet 610 is configured so that one of N and S poles thereof is coupled with the first pole piece 620. Further, the permanent magnet 610 is configured so that the other of the N and S poles thereof is coupled with the second pole piece 630.

The first pole piece 620 is coupled to one of the N and S poles of the permanent magnet 610, and includes a holding face 625 and an insertion recess 622.

The second pole piece 630 is coupled to the other of the N and S poles of the permanent magnet 610, and includes a holding face 635. For example, when the first pole piece 620 is coupled to the N pole of the permanent magnet 610, the second pole piece 630 is coupled to the S pole of the permanent magnet 610.

The magnetizable material 640 is configured so that one end face thereof is inserted into the insertion recess 622 and so that the other end face thereof is in contact with the second pole piece 630 or is opposite to the second pole piece 630 at a predetermined interval G4.

A depth D1 of the insertion recess 622 is greater than the interval G4 between the magnetizable material 640 and the second pole piece 630. Thus, even when the other end face of the magnetizable material 640 is in contact with the second pole piece 630, the magnetizable material 640 is allowed to be in contact with the first pole piece 620. That is, the magnetizable material 640 is allowed to move between the first and second pole pieces 620 and 630 in contact with the first pole piece 620.

The first pole piece 620, the second pole piece 630, and the magnetizable material 640 are preferably formed of a ferromagnetic substance such as iron, cobalt, nickel, and an alloy thereof.

The coil 650 encloses the magnetizable material 640. Here, the coil 650 is preferably enclosed with a bobbin 655 that is a nonconductor. Here, the magnetizable material 640 and the coil 650 are kept apart from each other by a predetermined gap G5 so as to allow the magnetizable material 640 to move freely. Preferably, the magnetizable material 640 and the bobbin 655 are kept apart from each other by the predetermined gap G5 so as to allow the magnetizable material 640 to move freely.

The control device controls electric current flowing through the coil 650 and the resulting magnetization of the magnetizable material 640. That is, the control device controls the magnetization of the magnetizable material 640 to hold or release a magnetic substance W to or from the holding faces 625 and 635 of the first and second pole pieces.

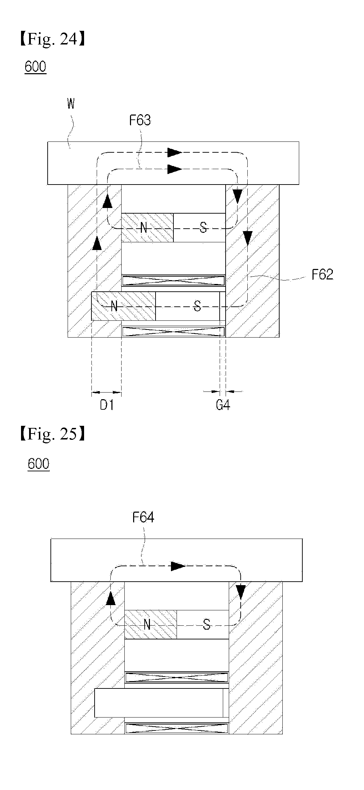

Referring to Fig. 24, the control device applies electric current to the coil 650 such that the same pole as the pole of the permanent magnet 610 coupled with the first pole piece 620 is formed on one end face of the magnetizable material 640 which abuts on the first pole piece 620. For example, when the N pole of the permanent magnet 610 is coupled to the first pole piece 620, and when the S pole of the permanent magnet 610 is coupled to the second pole piece 630, the electric current is applied to the coil 650 such that the N pole is formed on one end face of the magnetizable material 640 which abuts on the first pole piece 620.

Here, the magnetizable material 640 is shifted to be separated from the second pole piece 620 by the predetermined interval G4. Magnetic flux is formed so as to pass through the permanent magnet 610 and the magnetic substance W as denoted by F63, and to pass through the magnetizable material 640 and the magnetic substance W as denoted by F62. Thus, the magnetic substance holder 600 according to the present invention holds the magnetic substance W to the holding faces 625 and 635 of the first and second pole pieces.

Referring to Fig. 25, when the magnetic substance W is held to the holding faces 625 and 635 of the first and second pole pieces, the control device interrupts the electric current applied to the coil 650. Here, magnetic flux is formed so as to pass through the permanent magnet 610 and the magnetic substance W as denoted by F64.

Thus, the magnetic substance holder 600 according to the present invention holds the magnetic substance W even when no power is supplied after the magnetic substance W is held. In this way, the magnetic substance holder 600 of the present invention requires a supply of power only when holding the magnetic substance W, and does not require a supply of power during holding of the magnetic substance W, so that the cost of maintenance is lowered.

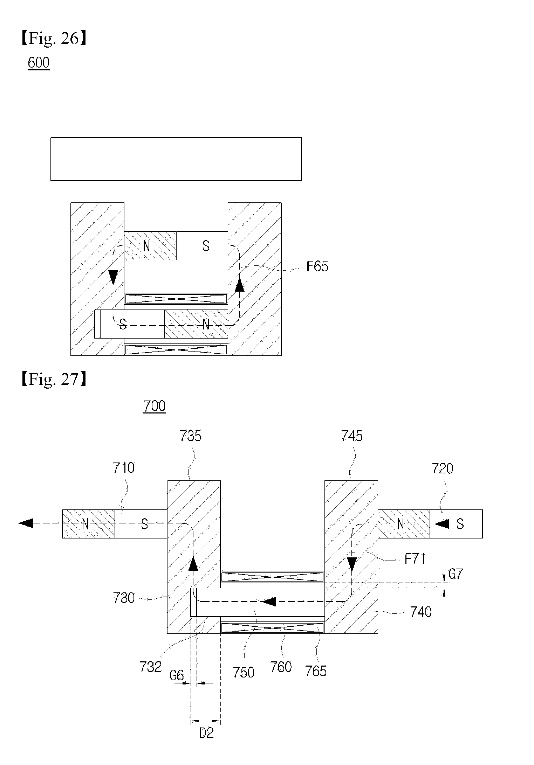

Referring to Fig. 26, when the magnetic substance W is held to the holding faces 625 and 635 of the first and second pole pieces, the control device applies electric current applied to the coil 650 such that a pole different from the pole of the permanent magnet 610 coupled with the first pole piece 620 is formed on one end face of the magnetizable material 640 which abuts on the first pole piece 620. For example, when the N pole of the permanent magnet 610 is coupled to the first pole piece 620, and when the S pole of the permanent magnet 610 is coupled to the second pole piece 630, the electric current is applied to the coil 650

Here, the other end face of the magnetizable material 640 is shifted to be in contact with the second pole piece 630. Further, magnetic flux is formed so as to pass through the permanent magnet 610 and the magnetizable material 640 as denoted by F65. Thus, the magnetic substance holder 600 according to the present invention releases the magnetic substance W from the holding faces 625 and 635 of the first and second pole pieces.

Referring to Fig. 23 again, after the magnetic substance W is released from the holding faces 625 and 635 of the first and second pole pieces, the control device interrupts the electric current applied to the coil 650. Here, magnetic flux is formed so as to pass through the permanent magnet 610 and the magnetic substance W as denoted by F21. Thus, the magnetic substance holder 600 according to the present invention continues to release the magnetic substance W even when no power is supplied after the magnetic substance W is released. Accordingly, the magnetic substance holder 600 of the present invention requires a supply of power only when releasing the magnetic substance W, and does not require a supply of power during releasing of the magnetic substance W, so that the cost of maintenance is lowered.

Referring to Fig. 24 again, when the magnetic substance W is held to the holding faces 625 and 635 of the first and second pole pieces, the control device applies electric current to the coil 650 such that the same pole as the pole of the permanent magnet 610 coupled with the first pole piece 620 is formed on one end face of the magnetizable material 640 which abuts on the first pole piece 620. For example, when the N pole of the permanent magnet 610 is coupled to the first pole piece 620, and when the S pole of the permanent magnet 610 is coupled to the second pole piece 630, the electric current is applied to the coil 650 such that the N pole is formed on one end face of the magnetizable material 640 which abuts on the first pole piece 620.

Here, magnetic flux is formed so as to pass through the magnetizable material 640 and the magnetic substance W as denoted by F62, and is added to the previously formed magnetic flux as denoted by F63. That is, as the entire magnetic flux increases, the magnetic substance W is more strongly held to the magnetic substance holder 600 according to the present invention.

Figs. 27 to 30 show a magnetic substance holder having two permanent magnets and a magnetizable material disposed to be movable in accordance with the present invention.

Referring to Fig. 27, a magnetic substance holder 700 according to yet another embodiment of the present invention includes a first permanent magnet 710, a second permanent magnet 720, a first pole piece 730, a second pole piece 740 a magnetizable material 750, a coil 760, and a control device (not shown).

The first permanent magnet 710 is configured so that one of N and S poles thereof is coupled with the first pole piece 730.

The second permanent magnet 720 is configured so that its pole different from the pole of the first permanent magnet 710 coupled with the first pole piece 730 is coupled with the second pole piece 740.

The first pole piece 730 is coupled to one of the N and S poles of the permanent magnet 710, and includes a holding face 735 and an insertion recess 732.

The second pole piece 740 is coupled to the pole of the second permanent magnet 720 which is different from the pole of the first permanent magnet 710 coupled with the first pole piece 730, and includes a holding face 745. For example, when the first pole piece 730 is coupled to the S pole of the first permanent magnet 710, the second pole piece 740 is coupled to the N pole of the second permanent magnet 720.

The magnetizable material 750 is configured so that one end face thereof is inserted into the insertion recess 732 and so that the other end face thereof is in contact with the second pole piece 740 or is opposite to the second pole piece 740 at a predetermined interval G6.

A depth D2 of the insertion recess 732 is greater than the interval G6 between the magnetizable material 750 and the second pole piece 740. Thus, even when the other end face of the magnetizable material 750 is in contact with the second pole piece 740, the magnetizable material 750 is allowed to be in contact with the first pole piece 730. That is, the magnetizable material 750 is allowed to move between the first and second pole pieces 730 and 740 in contact with the first pole piece 730.

The first pole piece 730, the second pole piece 740, and the magnetizable material 750 are preferably formed of a ferromagnetic substance such as iron, cobalt, nickel, and an alloy thereof.

The coil 760 encloses the magnetizable material 750. Here, the coil 760 is preferably enclosed with a bobbin 765 that is a nonconductor. Here, the magnetizable material 750 and the coil 760 are kept apart from each other by a predetermined gap G7 so as to allow the magnetizable material 750 to move freely. Preferably, the magnetizable material 750 and the bobbin 765 are kept apart from each other by the predetermined gap G7 so as to allow the magnetizable material 750 to move freely.

The control device controls electric current flowing through the coil 760 and the resulting magnetization of the magnetizable material 750. That is, the control device controls the magnetization of the magnetizable material 750 to hold or release a magnetic substance W to or from the holding faces 735 and 745 of the first and second pole pieces.

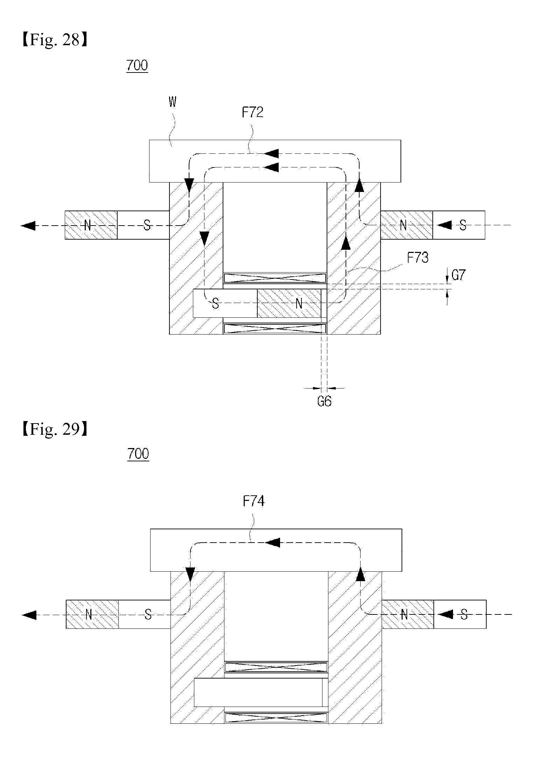

Referring to Fig. 28, the control device applies electric current to the coil 760 such that the same pole as the pole of the first permanent magnet 710 coupled with the first pole piece 730 is formed on one end face of the magnetizable material 750 which abuts on the first pole piece 730. For example, when the S pole of the first permanent magnet 710 is coupled to the first pole piece 730, and when the N pole of the second permanent magnet 710 is coupled to the second pole piece 740, the electric current is applied to the coil 760 such that the S pole is formed on one end face of the magnetizable material 750 which abuts on the first pole piece 740.

Here, the magnetizable material 750 is shifted to be separated from the second pole piece 740 by the predetermined interval G6. Magnetic flux is formed so as to pass through the second permanent magnet 720, the magnetic substance W, and the first permanent magnet 710 as denoted by F72, and to pass through the magnetizable material 750 and the magnetic substance W as denoted by F73. Thus, the magnetic substance holder 700 according to the present invention holds the magnetic substance W to the holding faces 735 and 745 of the first and second pole pieces.

Referring to Fig. 29, when the magnetic substance W is held to the holding faces 735 and 745 of the first and second pole pieces, the control device interrupts the electric current applied to the coil 760. Here, magnetic flux is formed so as to pass through the second permanent magnet 720, the magnetic substance W, and the first permanent magnet 710 as denoted by F74.

Thus, the magnetic substance holder 700 according to the present invention holds the magnetic substance W even when no power is supplied after the magnetic substance W is held. In this way, the magnetic substance holder 700 of the present invention requires a supply of power only when holding the magnetic substance W, and does not require a supply of power during holding of the magnetic substance W, so that the cost of maintenance is lowered.

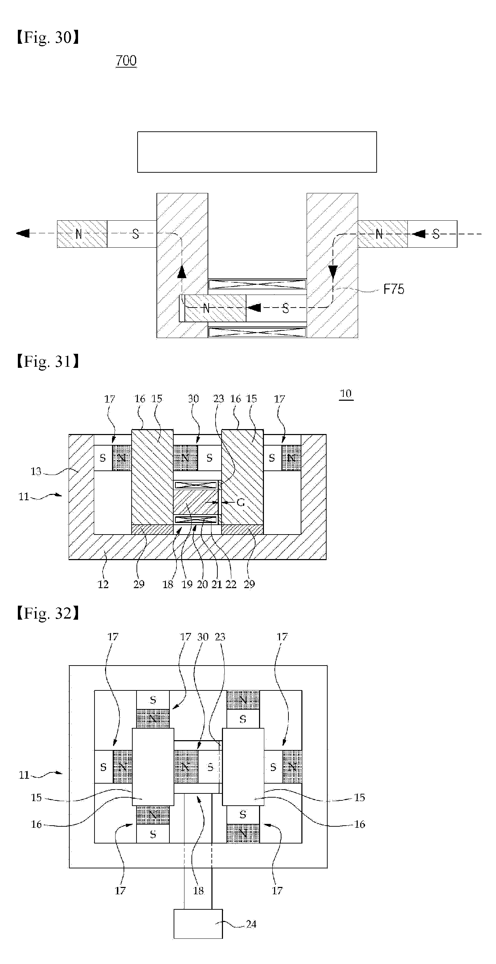

Referring to Fig. 30, when the magnetic substance W is held to the holding faces 735 and 745 of the first and second pole pieces, the control device applies electric current applied to the coil 760 such that a pole different from the pole of the first permanent magnet 710 coupled with the first pole piece 730 is formed on one end face of the magnetizable material 750 which abuts on the first pole piece 730. For example, when the S pole of the first permanent magnet 710 is coupled to the first pole piece 730, and when the N pole of the second permanent magnet 720 is coupled to the second pole piece 740, the electric current is applied to the coil 760 such that the N pole is formed on one end face of the magnetizable material 750 which abuts on the first pole piece 730.

Here, the magnetizable material 750 is shifted such that the other end face thereof comes into contact with the second pole piece 740. Magnetic flux is formed so as to pass through the second permanent magnet 720, the magnetizable material 750, and the first permanent magnet 710 as denoted by F75. Thus, the magnetic substance holder 700 according to the present invention releases the magnetic substance W from the holding faces 735 and 745 of the first and second pole pieces.

Referring to Fig. 27 again, after the magnetic substance W is released from the holding faces 735 and 745 of the first and second pole pieces, the control device interrupts the electric current applied to the coil 760. Here, magnetic flux is formed so as to pass through the second permanent magnet 720, the magnetizable material 750, and the first permanent magnet 710 as denoted by F71. Thus, the magnetic substance holder 700 according to the present invention continues to release the magnetic substance W even when no power is supplied after the magnetic substance W is released. Accordingly, the magnetic substance holder 700 of the present invention requires a supply of power only when releasing the magnetic substance W, and does not require a supply of power during releasing of the magnetic substance W, so that the cost of maintenance is lowered.

Referring to Fig. 28 again, when the magnetic substance W is held to the holding faces 735 and 745 of the first and second pole pieces, the control device applies electric current to the coil 760 such that the same pole as the pole of the first permanent magnet 710 coupled with the first pole piece 730 is formed on one end face of the magnetizable material 750 which abuts on the first pole piece 730. For example, when the S pole of the first permanent magnet 720 is coupled to the first pole piece 740, and when the N pole of the second permanent magnet 720 is coupled to the second pole piece 740, the electric current is applied to the coil 760 such that the S pole is formed on one end face of the magnetizable material 750 which abuts on the first pole piece 730.

Here, magnetic flux is formed so as to pass through the magnetizable material 750 and the magnetic substance W as denoted by F73, and is added to the previously formed magnetic flux as denoted by F73. That is, as the entire magnetic flux increases, the magnetic substance W is more strongly held to the magnetic substance holder 700 according to the present invention.

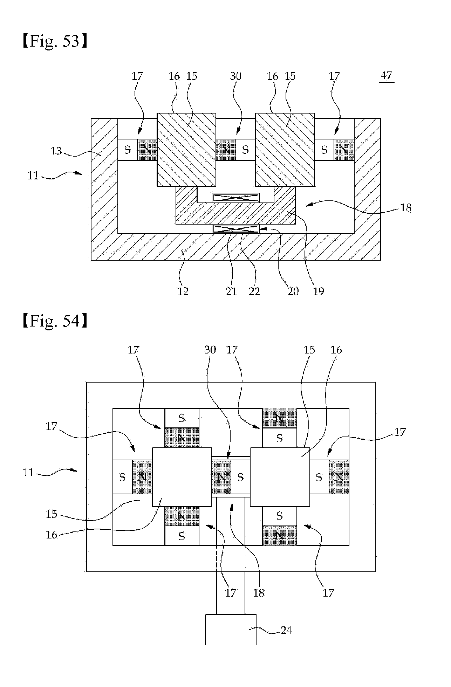

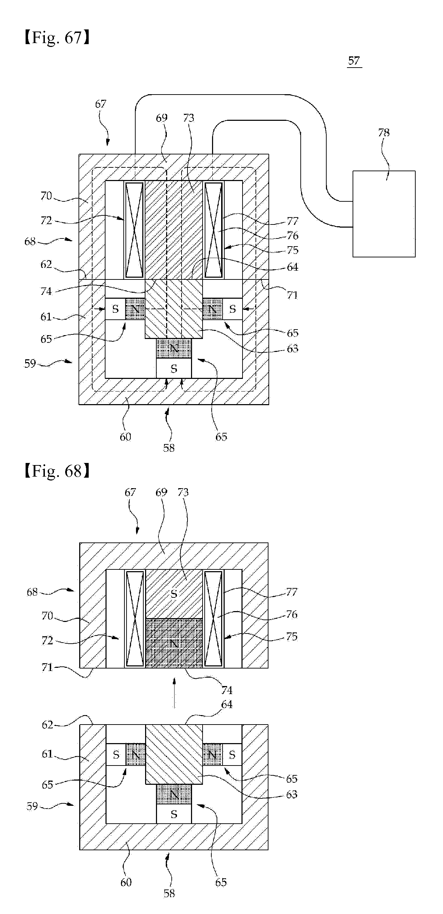

The magnetic substance holder having a combination of a permanent magnet and an electromagnet in accordance with the present invention may be classified into three types: a first type, as shown in Figs. 31 to 52, which releases a magnetic substance by converting a flow of lines of magnetic force passing through a permanent magnet, a pole piece, a magnetic substance, and a yoke so as to pass through the permanent magnet, the pole piece, a core, and the yoke using an electromagnet; a second type, as shown in Figs. 53 to 66, which holds or releases a magnetic substance by changing a flow of lines of magnetic force using an electromagnet; and a third type, as shown in Figs. 67 to 75, which includes a first magnet module having a permanent magnet and a second magnet module having an electromagnet, and supplies electric current to the electromagnet of the second magnet module when a holding force between the first and second magnet modules is removed.

Hereinafter, a variety of embodiments of the first type of magnetic substance holder according to the present invention will be described with reference to Figs. 31 to 52.

As shown in Figs. 31 and 32, a magnetic substance holder 10 having a combination of a permanent magnet and an electromagnet in accordance with an embodiment of the present invention includes a yoke 11, a pair of pole pieces 15 disposed inside the yoke 11, a plurality of permanent magnets 17 disposed between the yoke 11 and the pole pieces 15, an electromagnet 18 and an intermediate permanent magnet 30 disposed between the two pole pieces 15, and an electromagnet control device 24 supplying electric current to the electromagnet 18.

The yoke 11 includes a base plate 12 and a plurality of side plates 13 disposed at an edge of the base plate 12. The base plate 12 and the side plates 13 may be formed in one body. The yoke 11 is formed of a ferromagnetic substance that is magnetized in a direction of a magnetic field when the magnet field is applied from the outside.

The first and second pole pieces 15 are disposed inside the yoke 11 so as to be spaced apart from the yoke 11. Each pole piece 15 has a holding face 16 adapted to hold a magnetic substance W. Like the yoke 11, each pole piece 15 is also formed of a ferromagnetic substance. Each pole piece 15 is supported by a support member 29, and thus is separated from the base plate 12 of the yoke 11. Each support member 29 may be formed of one of various materials such as plastic that are not influenced by a magnetic field. The support members 29 function to support the respective pole pieces 15 and simultaneously prevent lines of magnetic force passing through the pole pieces from being transmitted to the yoke 11.

The plurality of permanent magnets 17 are disposed between the side plates 13 of the yoke 11 and sides of the pole pieces 15 which are not in contact with the intermediate permanent magnet 30. The plurality of permanent magnets 17 are in contact with the pole pieces 15 such that their magnetic poles are the same as those of the intermediate permanent magnet 30 which are in contact with the pole pieces 15. That is, the N poles of the permanent magnets 17 are in contact with the first pole piece 15 abutting on the N pole of the intermediate permanent magnet 30, and the S poles of the permanent magnets 17 are in contact with the second pole piece 15 abutting on the S pole of the intermediate permanent magnet 30.

The electromagnet 18 includes a core 19 and a coil assembly 20 enclosing the core 19. The coil assembly 20 is made up of a coil 21 configured to supply electric current and a bobbin 22 that is a nonconductor enclosing the coil 21. The electromagnet 18 is disposed between the two pole pieces 15 such that one end of the core 19 is in contact with the side of the first pole piece 15, and such that the other end of the core 19 is in contact with the side of the second pole piece 15. The other end of the core 19 is spaced a predetermined interval apart from the side of the second pole piece 15. The interval G between the core 19 and the second pole piece 15 is such a size that lines of magnetic force emitting from the core 19 can move to the second pole piece 15 when the electric current is supplied to the coil 21 and thus the core 19 is magnetized.

A spacer member 23 for supporting the electromagnet 18 in the state in which the core 19 is separated from the second pole piece 15 is disposed between the second pole piece 15 adjacent to the other end of the core 19 and the electromagnet 18. The spacer member 23 may be formed one of various materials such as plastic that are not influenced by a magnetic field. Of course, the spacer member 23 may be omitted. In this case, an end of the bobbin 22 of the coil assembly 20 is in contact with the side of the second pole piece 15.

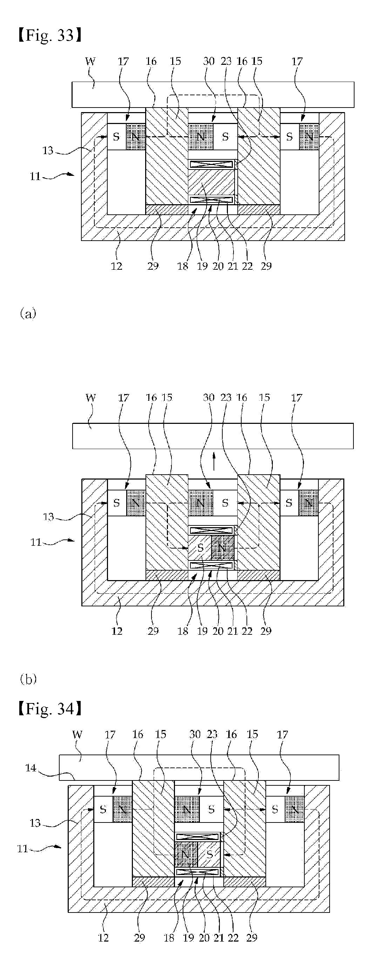

Hereinafter, an operation of the magnetic substance holder 10 having a combination of a permanent magnet and an electromagnet according to an embodiment of the present invention will be described with reference to Fig. 33.

As shown in Fig. 33(a), when the electromagnet 18 is not magnetized, a closed loop in which the lines of magnetic force of the permanent magnets 17 and the intermediate permanent magnet 30 pass through the holding face 16 of each pole piece 15, is formed. That is, the lines of magnetic force return in the order of the intermediate permanent magnet, the first pole piece, the second pole piece, and the intermediate permanent magnet. Here, the lines of magnetic force of the permanent magnets 17 and the intermediate permanent magnet 30 do not pass through the electromagnet 18 between the two pole pieces 15. In this case, when the magnetic substance W moves toward the holding faces 16 of the pole pieces 15, the magnetic substance that is a magnetic material is held to the holding faces 16 of the pole pieces 15.

On the other hand, as shown in Fig. 33(b), when the electric current is supplied to the electromagnet 18 and thus the ends of the electromagnet 18 which are in contact with the respective pole pieces 15 are magnetized to be the magnetic poles opposite those of the intermediate permanent magnet 30, the magnetic substance W can be separated from the holding faces 16. That is, when the end of the electromagnet 18 which is in contact with the pole piece 15 abutting on the N pole of the intermediate permanent magnet 30 is magnetized to be the S pole, and when the other end of the electromagnet 18 which is in contact with the pole piece 15 abutting on the S pole of the intermediate permanent magnet 30 is magnetized to be the N pole, the direction of the lines of magnetic force of the permanent magnet 17 and the intermediate permanent magnet 30 is directed toward the electromagnet 18, Here, the lines of magnetic force return in the order of the intermediate permanent magnet, the first pole piece, the core, the second pole piece, and the intermediate permanent magnet. Thus, a flow of the lines of magnetic force passing through the holding face 16 of each pole piece 15 is not formed, so that the holding force is removed from each holding face 16.

When the electric current supplied to the electromagnet 18 is interrupted, the direction of the lines of magnetic force of the permanent magnet 17 and the intermediate permanent magnet 30 is changed again, and a holding force capable of holding the magnetic substance W is generated from the holding face 16 of each pole piece 15.

Meanwhile, the holding force can be increased by magnetizing the electromagnet 18. That is, as shown in Fig. 34, in the state in which the holding force is generated from the holding faces 16 of the pole pieces 15, when the electric current is supplied to the electromagnet 18 and the ends of the core 19 which are in contact with the respective pole pieces 15 are magnetized to be the same magnetic poles as the permanent magnets 17 that are in contact with the pole pieces 15 adjacent to the ends of the core 19, the lines of magnetic force of the electromagnet 18 pass through the holding faces 16 of the pole pieces 15, and are added to the lines of magnetic force emitted from the permanent magnets 17 and the intermediate permanent magnet 30. Thus, the entire magnetic force is increased, and thus the holding force is increased at the holding faces 16.

In the present invention, the shape of the yoke 11 or the pole piece 15 is not limited to the shown shape, and thus it may be modified into one of various shapes. The electromagnet 18 may be disposed between the two pole pieces 15 such that a gap G is formed to be apart from the pole piece 15 that is in contact with the N poles of the permanent magnets 17 and the N pole of the intermediate permanent magnet 30.

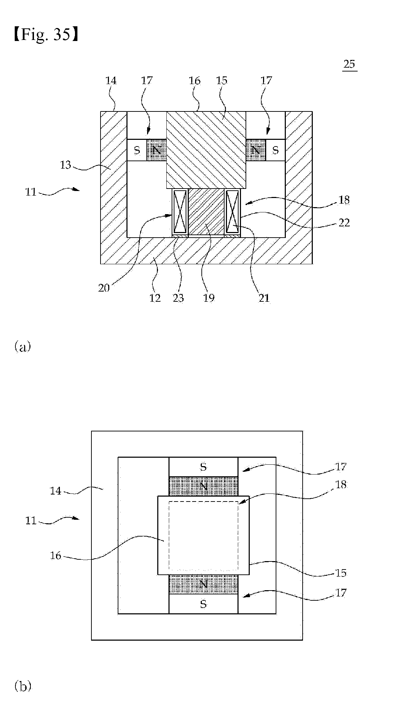

A magnetic substance holder 25 having a combination of a permanent magnet and an electromagnet, which is shown in Figs. 35(a) and 35(b), includes a yoke 11, a pole piece 15 disposed inside the yoke 11, a plurality of permanent magnets 17 disposed between the yoke 11 and the pole piece 15, an electromagnet 18 disposed between the yoke 11 and the pole piece 15, and an electromagnet control device (not shown) supplying electric current to the electromagnet 18. The plurality of permanent magnets 17 are disposed between side plates 13 of the yoke 11 and sides of the pole piece 15. The electromagnet 18 is disposed between a base plate 12 of the yoke 11 and a bottom surface of the pole piece 15. The electromagnet 18 includes a core 19 and a coil assembly 20 enclosing the core 19. One end of the core 19 is in contact with the bottom surface of the pole piece 15, whereas the other end of the core 19 is spaced a predetermined interval apart from the base plate 12 of the yoke 11.

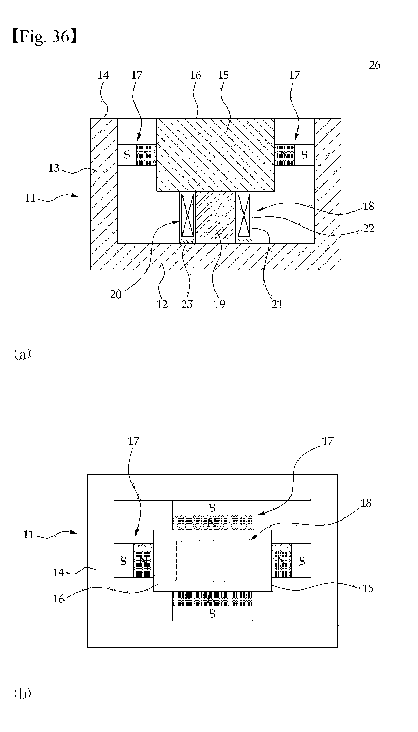

A magnetic substance holder 26 having a combination of a permanent magnet and an electromagnet, which is shown in Figs. 36(a) and 36(b), is configured so that permanent magnets 18 are disposed on all sides of a pole piece 15. All the permanent magnets 17 are configured so that the same magnetic pole is in contact with the pole piece 15.

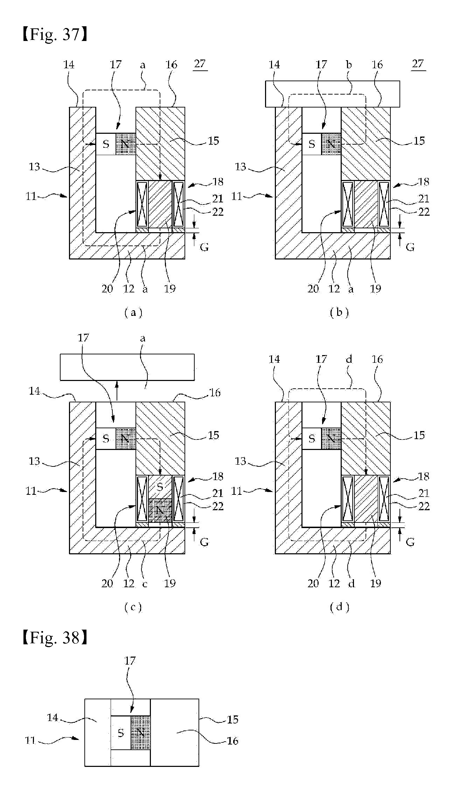

A magnetic substance holder 27 having a combination of a permanent magnet and an electromagnet, which is shown in Figs. 37 and 38, is configured so that a yoke 11 includes one base plate 12 and one side plate 13, so that a permanent magnet 17 is disposed between the side plate 13 of the yoke 11 and a side of a pole piece 15, and so that an electromagnet 18 is disposed between the base plate 12 of the yoke 11 and a bottom surface of the pole piece 15.

As shown in Fig. 37(a), when no electric current is supplied to the electromagnet 18, the lines of magnetic force of the permanent magnet 17 return in the order of the permanent magnet, the pole piece, the yoke, and the permanent magnet. In this state, as shown in Fig. 37(b), when the magnetic substance W is approached, the magnetic substance W is held to holding faces 14 and 16. In contrast, as shown in Fig. 37(c), when the electric current is supplied to the electromagnet 18 and thus an end of a core 19 which is in contact with the pole piece 15 is magnetized to be an S pole, the lines of magnetic force return in the order of the permanent magnet, the pole piece, the core, the yoke, and the permanent magnet, and thus a holding force is removed. Thereby, the magnetic substance W is separated from the holding faces 14 and 16. After the magnetic substance W is separated, when the electric current supplied to the electromagnet 18 is interrupted, the return direction of the lines of magnetic force is converted into its original state.

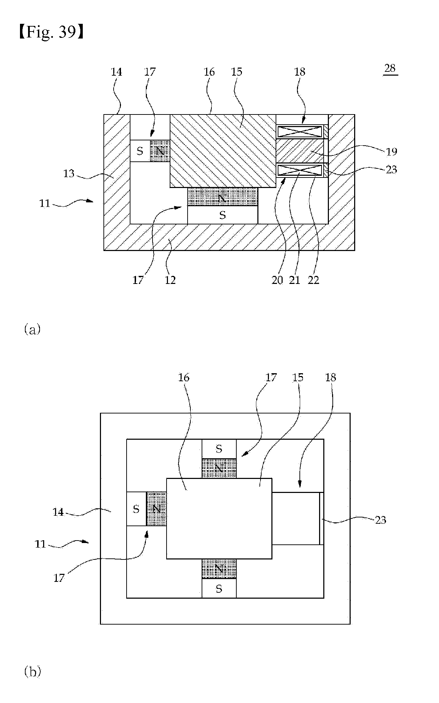

A magnetic substance holder 28 having a combination of a permanent magnet and an electromagnet, which is shown in Figs. 39(a) and 39(b), is configured so that a plurality of permanent magnets 17 are disposed between side plates 13 of a yoke 11 and sides of the pole piece 15, and between a base plate 12 of the yoke 11 and a bottom surface of the pole piece 15, and so that an electromagnet 18 is disposed between the other side plate 13 of the yoke 11 and the other side of the pole piece 15. One end of a core 19 of the electromagnet 18 is in contact with the other side of the pole piece 15, whereas the other end of the core 19 is spaced a predetermined interval apart from the base plate 12 of the yoke 11.

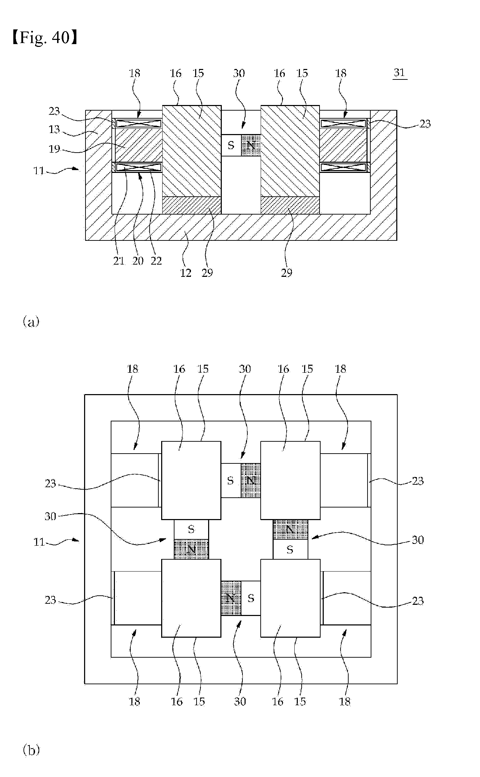

A magnetic substance holder 31 having a combination of a permanent magnet and an electromagnet, which is shown in Figs. 40(a) and 40(b), is configured so that four pole pieces 15 are disposed inside a yoke 11. In detail, one of the four pole pieces 15 is disposed to face two of the other three pole pieces 15, and the facing pole pieces 15 are connected to each other by intermediate permanent magnets 30. Each pole piece 15 is supported by a support member 29, and is spaced apart from a base plate 12 of the yoke 11.

Each intermediate permanent magnet 30 and each electromagnet 18 are connected to each pole piece 15. Each electromagnet 18 is disposed between the yoke 11 and a side of each pole piece, and each intermediate permanent magnet 30 is disposed between the two pole pieces that are adjacent to each other. Thus, the two intermediate permanent magnets 30 are connected to one pole piece 15. The two intermediate permanent magnets 30 connected to one pole piece 15 are configured so that the same magnetic poles are in contact with the sides of the pole piece 15. That is, only the N pole of each intermediate permanent magnet 30 or only the S pole of each permanent magnet 17 is in contact with each pole piece 15.

In the magnetic substance holder 31 having a combination of a permanent magnet and an electromagnet, when a holding force is removed from holding faces 16 of the pole pieces 15, ends of the electromagnets 18 which are in contact with the respective pole pieces 15 are magnetized to be magnetic poles opposite the magnetic poles of the intermediate permanent magnets 30 which are in contact with the pole pieces 15. For example, the ends of the electromagnets 18 which are in contact with the pole pieces 15 abutting on the N poles of the intermediate permanent magnets 30 are magnetized to be the S poles, whereas the ends of the electromagnets 18 which are in contact with the pole pieces 15 abutting on the S poles of the intermediate permanent magnets 30 are magnetized to be the N poles.

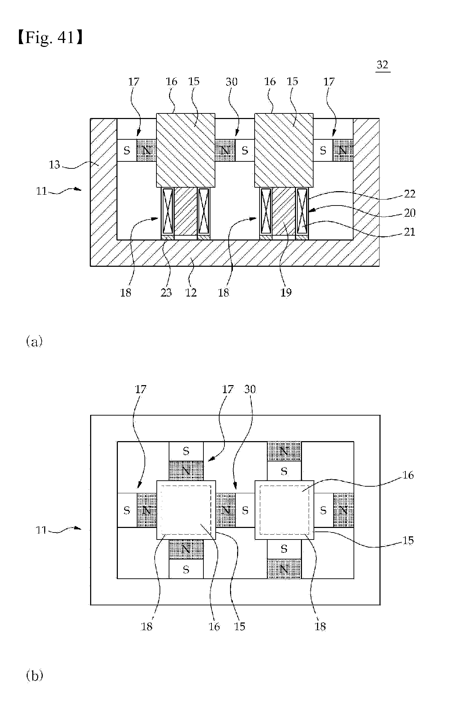

A magnetic substance holder 32 having a combination of a permanent magnet and an electromagnet, which is shown in Figs. 41(a) and 41(b), is configured so that electromagnets 18 are disposed between bottom surfaces of pole pieces 15 disposed inside a yoke 11 and a base plate 12 of the yoke 11, so that a plurality of permanent magnets 17 are disposed between sides of each pole piece 15 and side plates of the yoke 11, and so that an intermediate permanent magnet 30 is disposed between the pole piece 15 and the pole piece 15. Magnetic poles of the permanent magnets 17 which are in contact with each pole piece 15 are the same as that of the intermediate permanent magnet 30 which is in contact with each pole piece 15. That is, the N poles of the permanent magnets 17 are in contact with the pole piece 15 abutting on the N pole of the intermediate permanent magnet 30, and the S poles of the permanent magnets 17 are in contact with the pole piece 15 abutting on the S pole of the intermediate permanent magnet 30.

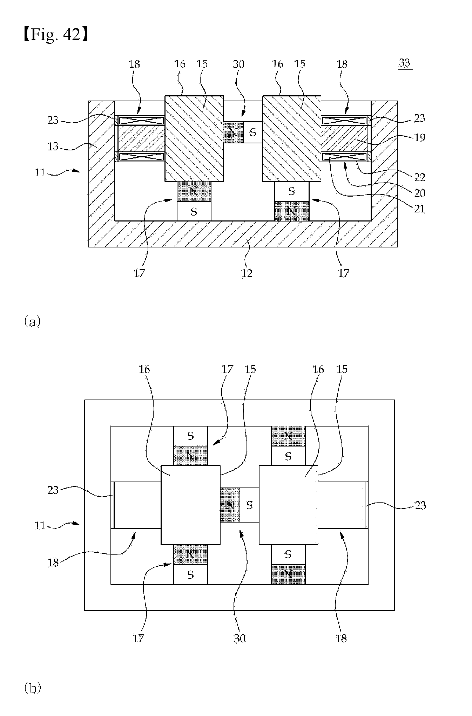

A magnetic substance holder 33 having a combination of a permanent magnet and an electromagnet, which is shown in Figs. 42(a) and 42(b), is configured so that a plurality of pole pieces 15 disposed inside a yoke 11 are connected by an intermediate permanent magnet 30, and so that a plurality of electromagnets 18 and permanent magnets 17 are disposed to be in contact with sides and bottom surfaces of the pole pieces 15. In detail, each electromagnet 18 is disposed between a side plate 13 of the yoke 11 and the side of each pole piece 15, and the permanent magnets 17 are disposed between the side plates 13 of the yoke 11 and the sides of each pole piece 15, and between a base plate 12 of the yoke 11 and the bottom surface of each pole piece 15. A magnetic pole of the intermediate permanent magnet 30 and a magnetic pole of the permanent magnet 17, both of which are in contact with each pole piece 15, are the same. That is, only the N pole of the intermediate permanent magnet 30 and only the N pole of the permanent magnet 17 are in contact with one of the pole pieces 15, and only the S pole of the intermediate permanent magnet 30 and only the S pole of the permanent magnet 17 are in contact with the other of the pole pieces 15.

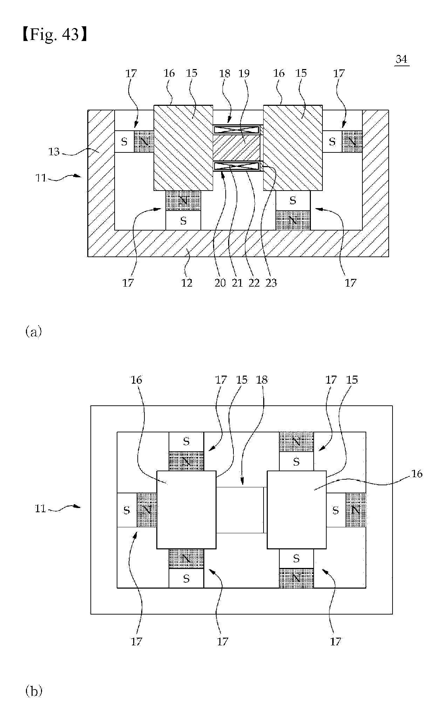

A magnetic substance holder 34 having a combination of a permanent magnet and an electromagnet, which is shown in Figs. 43(a) and 43(b), is configured so that a plurality of pole pieces 15 disposed inside a yoke 11 are connected by an electromagnet 18, and so that a plurality of permanent magnets 17 are disposed to be in contact with sides and bottom surface of each pole piece 15. The permanent magnets 17 are disposed between side plates 13 of the yoke 11 and the sides of each pole piece 15, and between a base plate 12 of the yoke 11 and the bottom surface of each pole piece 15. Magnetic poles of the permanent magnets 17 which are in contact with each pole piece 15 are the same.

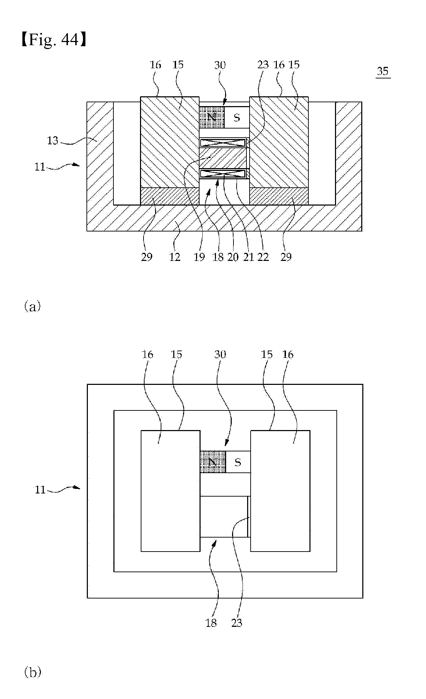

A magnetic substance holder 35 having a combination of a permanent magnet and an electromagnet, which is shown in Figs. 44(a) and 44(b), is configured so that a plurality of pole pieces 15 disposed inside a yoke 11 are connected by an electromagnet 18 and an intermediate permanent magnet 30. Each pole piece 15 is supported by a support member 29 coupled to a base plate 12 of the yoke 11, and thus is spaced apart from the base plate 12 of the yoke 11. When no electric current is supplied to the electromagnet 18, the lines of magnetic force emitted from the intermediate permanent magnet 30 pass through a holding face 16 of each pole piece 15, and thus a holding force is generated from the holding face 16 of each pole piece 15.

On the other hand, when the electric current is supplied to the electromagnet 18 and ends of a core 19 are magnetized to be magnetic poles opposite those of the intermediate permanent magnet 30 which are in contact with the pole pieces 15 adjacent to the respective ends of the core 19, the direction of the lines of magnetic force emitted from the intermediate permanent magnet 30 is changed, and thus the holding force is removed from the holding face 16 of each pole piece 15. When the electric current is supplied to the electromagnet 18 and the ends of the core 19 are magnetized to be the same magnetic poles as those of the intermediate permanent magnet 30 which are in contact with the pole pieces 15 adjacent to the respective ends of the core 19, the lines of magnetic force emitted from the electromagnet 18 can increase the holding force on the holding faces 16 of the pole pieces 15.

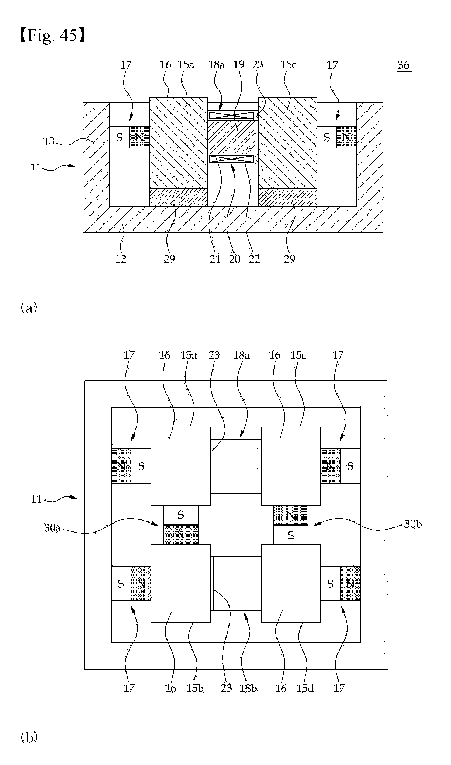

A magnetic substance holder 36 having a combination of a permanent magnet and an electromagnet, which is shown in Figs. 45(a) and 45(b), is configured so that four pole pieces 15a, 15b, 15c and 15d are disposed inside a yoke 11, and are connected by electromagnets 18a and 18b or intermediate permanent magnets 30a and 30b. Sides of the pole pieces 15a, 15b, 15c and 15d are connected with side plates 13 of the yoke 11 via permanent magnets 17. One of the four pole pieces is disposed to face two of the other three pole pieces 15.

The first pole piece 15a is connected with the second pole piece 15b by the first intermediate permanent magnet 30a as well as with the third pole piece 15c by the first electromagnet 18a. The second pole piece 15b is connected with the first pole piece 15a by the first intermediate permanent magnet 30a as well as with the fourth pole piece 15d by the second electromagnet 18b. The fourth pole piece 15d is connected with the second pole piece 15b by the second electromagnet 18b as well as with the third pole piece 15c by the second intermediate permanent magnet 30b. Here, the first intermediate permanent magnet 30a is disposed so that an N pole thereof is in contact with the second pole piece 15b, and so that an S pole thereof is in contact with the first pole piece 15a. The second intermediate permanent magnet 30b is disposed so that an N pole thereof is in contact with the third pole piece 15c, and so that an S pole thereof is in contact with the fourth pole piece 15d.

The same magnetic pole of each permanent magnet 17 as that of the intermediate permanent magnet which is in contact with the pole piece abutting on each permanent magnet 17 is in contact with the pole piece. That is, the S pole of the permanent magnet 17 is in contact with the first pole piece 15a, and the N pole of the permanent magnet 17 is in contact with the second pole piece 15b. Further, the N pole of the permanent magnet 17 is in contact with the third pole piece 15c, and the S pole of the permanent magnet 17 is in contact with the fourth pole piece 15d.

In this magnetic substance holder 36 having a combination of a permanent magnet and an electromagnet, when no electric current is supplied to the electromagnets 18a and 18b, the lines of magnetic force of the intermediate permanent magnets 30a and 30b and the lines of magnetic force of the permanent magnets 17 are directed toward holding faces 16 of the pole pieces 15a, 15b, 15c and 15d, and thus a holding force is generated from the holding faces 16 of the pole pieces 15a, 15b, 15c and 15d.

In contrast, the electromagnets 18a and 18b are magnetized such that ends thereof become magnetic poles opposite those of the intermediate permanent magnets which are in contact with the pole pieces adjacent to the respective ends of the electromagnets 18a and 18b, the direction of the lines of magnetic force emitted from the intermediate permanent magnets 30a and 30b and the permanent magnets 17 is changed, and thus a holding force is removed from a holding face 16 of each of the pole pieces 15a, 15b, 15c and 15d. That is, when the end of the first electromagnet 18a which is in contact with the first pole piece 15a is magnetized to be the N pole, and when the end of the first electromagnet 18b which is in contact with the second pole piece 15b is magnetized to be the S pole, the holding force is removed from the holding faces 16 of the pole pieces 15a, 15b, 15c and 15d.

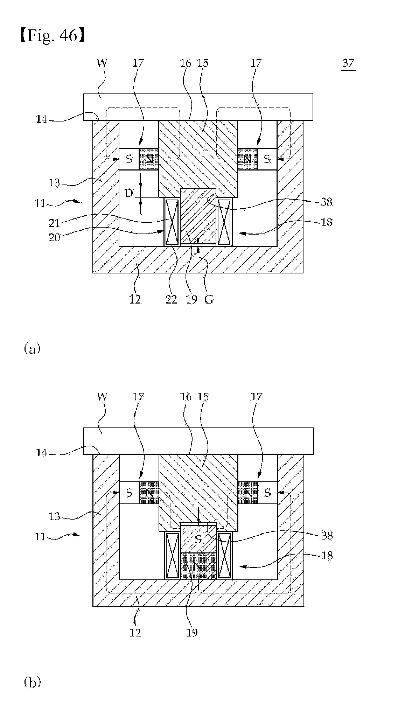

A magnetic substance holder having a combination of a permanent magnet and an electromagnet, which is shown in Figs. 46 to 49, is configured so that the core of the electromagnet can be shifted.

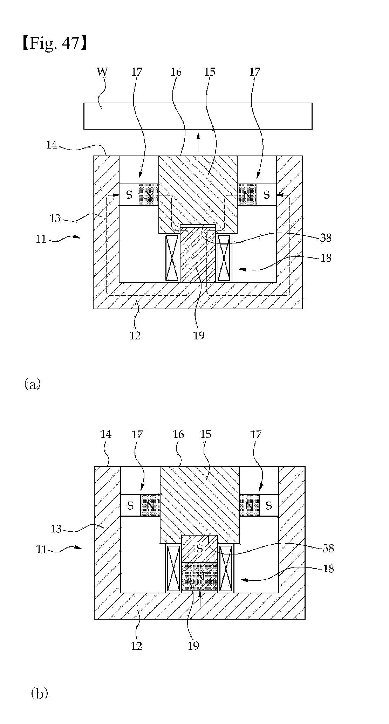

A magnetic substance holder 37 having a combination of a permanent magnet and an electromagnet, which is shown in Figs. 46(a) and 46(b) and Figs. 47(a) and 47(b) is configured so that a plurality of permanent magnets 17 are disposed to be in contact with sides of a pole piece 15 disposed inside a yoke 11, and so that an electromagnet 18 is disposed between a bottom surface of the pole piece 15 and a base plate 12 of the yoke 11. The electromagnet 18 has a core 19 and a coil assembly 20 enclosing the core 19. An upper end of the core 19 is inserted into an insertion recess 38 formed in the bottom surface of the pole piece 15, and a lower end of the core 19 is spaced a predetermined gap G apart from the base plate 12 of the yoke 11. This electromagnet 18 is a magnetism omission type electromagnet that the core 19 moves toward the middle of a coil 21 when electric current is applied to the coil 21.

A depth D of the insertion recess 38 is greater than the gap G between the base plate 12 of the yoke 11 and the lower end of the core 19. Thus, even when the core 19 is lowered to the utmost, and the lower end thereof comes into contact with the base plate 12 of the yoke 11, the core 19 can be kept in contact with the pole piece 15. A width of the insertion recess 38 has a dimension in which the core 19 can be forcibly pressed to some extent, particularly a dimension in which the core 19 inserted into the insertion recess 38 can be lowered only by application of a magnetic repulsive force against the pole piece 15 rather than by self-weight.

As shown in Fig. 46(a), when no electric current is supplied to the electromagnet 18 in a state in which an end of the core 19 of the electromagnet 18 is separated from the yoke 11, the lines of magnetic force emitted from the permanent magnets 17 pass through a holding face 14 of the yoke 11 and a holding face 16 of the pole piece 15, and a holding force is generated from the holding face 14 of the yoke 11 and the holding face 16 of the pole piece 15, so that a magnetic substance W can be held.

As shown in Fig. 46(b), when the electric current is supplied to the electromagnet 18 and the upper end of the core 19 is magnetized to be a magnetic pole opposite those of the permanent magnets 17 that are in contact with the pole piece 15, the core 19 moves toward the middle of the coil 21, and the pole piece 15 is lowered toward the base plate 12 of the yoke 11. Here, the lines of magnetic force of the permanent magnets 17 are directed toward the core 19, thereby passing through the pole piece 15, the core 19, the base plate 12 of the yoke 11, and side plates of the yoke 11 to form closed loops. Accordingly, a holding force is removed from the holding face 14 of the yoke 11 and the holding face 16 of the pole piece 15.

As shown in Fig. 47(a), when no electric current is supplied to the electromagnet 18 in a state in which the core 19 is lowered and thus the lower end thereof is in contact with the base plate 12 of the yoke 11, the pole piece 15 and the base plate 12 of the yoke 11 are connected through the core 19. Here, the lines of magnetic force emitted from the permanent magnets 17 maintain return paths passing through the pole piece 15, the core 19, the base plate 12 of the yoke 11, and the side plates of the yoke 11.

As shown in Fig. 47(b), when the electric current is supplied to the electromagnet 18 and the upper end of the core 19 is magnetized into a magnetic pole opposite those of the permanent magnets 17 that are in contact with the pole piece 15, an attractive force is generated between the pole piece 15 and the magnetized core 19. Here, the core 19 moves toward the pole piece 15 and is further inserted into the insertion recess 38 of the pole piece 15, so that the lower end of the core 19 is separated from the base plate 12 of the yoke 11. In this state, when the electric current supplied to the electromagnet 18 is interrupted, the core 19 is inserted into the insertion recess 38 to the utmost, and the lower end thereof is kept separated from the base plate 12 of the yoke 11.

Alternatively, to apply an elastic force to the core 19 in a direction in which the core 19 is separated from the yoke 11, a spring may be disposed between the yoke 11 and the core 19.

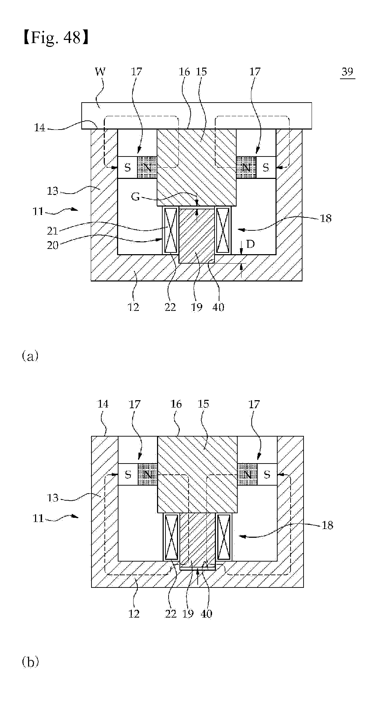

A magnetic substance holder 39 having a combination of a permanent magnet and an electromagnet, which is shown in Figs. 48(a) and 48(b), is mostly similar in configuration to the magnetic substance holder 37 having a combination of a permanent magnet and an electromagnet, which is shown in Figs. 46(a) and 46(b) and Figs. 47(a) and 47(b), and is configured so that a gap G is formed between an upper end of a core 19 and a pole piece 15, and so that a base plate 12 of a yoke 11 is provided with an insertion recess 40 for receiving a lower end of the core 19. A depth of the insertion recess 40 is greater than the gap G between the upper end of the core 19 and the pole piece 15.

As shown in Fig. 48(a), when no electric current is supplied to the electromagnet 18 in a state in which the upper end of the core 19 is separated from the pole piece 15, a holding force is generated from a holding face 14 of the yoke 11 and a holding face 16 of the pole piece 15 by the lines of magnetic force emitted from the permanent magnets 17. When the electric current is supplied to the electromagnet 18, the core 19 moves toward the middle of the coil 21, and thus the upper end of the core 19 comes into contact with the pole piece 15.

As shown in Fig. 48(b), when the electric current supplied to the electromagnet 18 is interrupted in a state in which the upper end of the core 19 is in contact with the pole piece 15, the core 19 is stopped in a raised state. This is because the core 19 is forcibly pressed in the insertion recess 40 to some extent, and the core 19 inserted into the insertion recess 40 is not lowered by self-weight. When the upper end of the core 19 is in contact with the pole piece 15, the pole piece 15 and the base plate 12 of the yoke 11 are connected through the core 19. In this case, the direction of the lines of magnetic force of the permanent magnets 17 is changed, and thus the holding force is removed from the holding face 14 of the yoke 11 and the holding face 16 of the pole piece 15.

Meanwhile, when the electric current is supplied to the electromagnet 18 and thus the upper end of the core 19 is magnetized to be the same magnetic pole as those of the permanent magnets 17 which are in contact with the pole piece 15, a repulsive force is generated between the core 19 and the pole piece 15, and thus the core 19 is lowered in its original state.

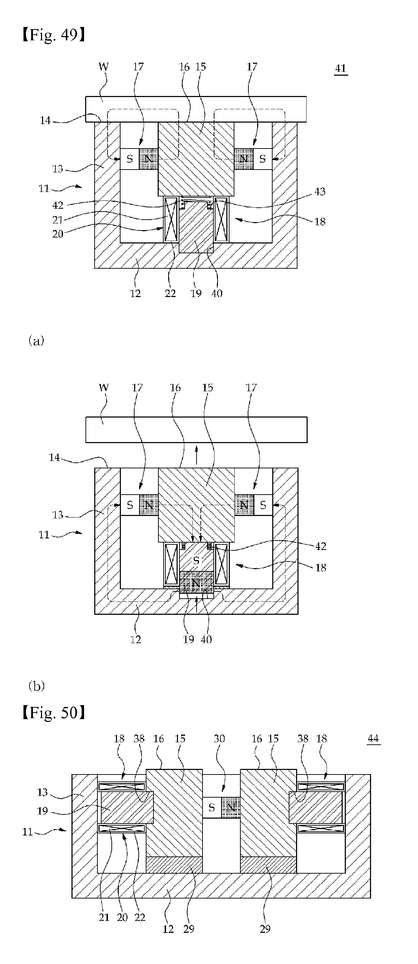

A magnetic substance holder 41 having a combination of a permanent magnet and an electromagnet, which is shown in Figs. 49(a) and 49(b), is mostly similar in configuration to the magnetic substance holder 39 having a combination of a permanent magnet and an electromagnet, which is shown in Figs. 48(a) and 48(b), and is configured so that a spring 42 is installed between a pole piece 15 and a core 19 of an electromagnet 18. The spring 42 is configured so that one end thereof is put in an installation recess 43 formed in an upper end of the core 19 and the other end thereof is in contact with a bottom surface of the pole piece 15. This spring 42 applies an elastic force to the core 19 in a direction in which the core 19 is separated from the pole piece 15, and maintains the core 19 in a state in which the core 19 is separated from the pole piece 15 when no electric current is supplied to the electromagnet 18. The electromagnet 18 is a magnetism omission type electromagnet that the core 19 moves toward the middle of a coil 21 when the electric current is applied to a coil 21.

As shown in Fig. 49(b), when the electric current is supplied to the electromagnet 18 and thus an upper end of the core 19 is magnetized to be an S pole opposite magnetic poles of the permanent magnets 17 which are in contact with the pole piece 15, the core 19 is raised toward the middle of the coil 21 while compressing the spring 42, thereby coming in contact with the pole piece 15. When the core 19 is raised, the pole piece 15 and a base plate 12 of a yoke 11 are connected through the core 19, and a holding force is removed from a holding face 14 of the yoke 11 and a holding face 16 of the pole piece 15.

A magnetic substance holder 44 having a combination of a permanent magnet and an electromagnet, which is shown in Fig. 50, is configured so that a plurality of pole pieces 15 are disposed inside a yoke 11 and so that an intermediate permanent magnet 30 is disposed between the neighboring two pole pieces 15. Each pole piece 19 is disposed to be separated from the yoke 11 by a support member 29. Electromagnets 18 are disposed between the pole pieces 15 and side plates 13 of the yoke 11. Each electromagnet 18 includes a core 19 and a coil assembly 20. The core 19 of each electromagnet 18 is movably disposed between each pole piece 11 and each side plate 13 of the yoke 11.

An insertion recess 38 is formed in a side of each pole piece 15, and one end of each core 19 is inserted into each insertion recess 38. A depth of each insertion recess 38 is greater than a gap by which the other end of each core 19 is separated from the side plate 13 of the yoke 11. Whichever direction each core 19 moves, each core 19 is always kept in contact with each pole piece 15 in which the insertion recess 38 is formed.

The magnetic substance holder 44 having a combination of a permanent magnet and an electromagnet is configured so that, when the other end of each core 19 is spaced a predetermined gap apart from the yoke 11, a holding force is generated from holding faces 16 of the pole pieces 15 by a magnetic force of the intermediate permanent magnet 30. Meanwhile, when electric current is supplied to the electromagnet 18 and thus each core 19 moves to the middle of a coil 21, the other end of each core 19 comes into contact with the yoke 11. Here, each pole piece 15 and the yoke 11 is connected by each core 19, the lines of magnetic force of the intermediate permanent magnet 30 is directed toward the base plate 12 of the yoke 11, and thus the holding force is removed from the holding faces 16 of the pole pieces 15.

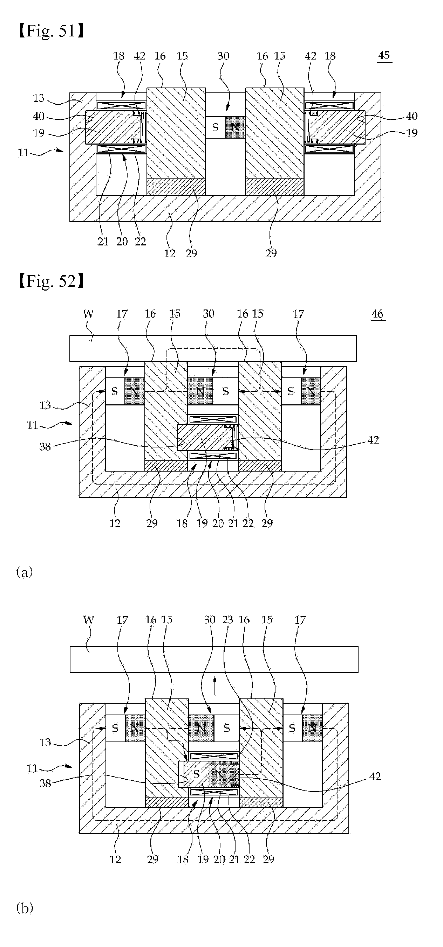

Like the magnetic substance holder 44 having a combination of a permanent magnet and an electromagnet which is shown in Fig. 50, a magnetic substance holder 45 having a combination of a permanent magnet and an electromagnet, which is shown in Fig. 51, is configured so that a plurality of pole pieces 15 are disposed inside a yoke 11, so that an intermediate permanent magnet 30 is disposed between the neighboring pole pieces 15, and so that an electromagnet 18 is disposed between each pole piece 15 and a side plate 13 of the yoke 11. The side plates 13 of the yoke 11 are provided with a plurality of insertion recesses 40, into each of which one end of the core 19 of each electromagnet 18 is inserted. Each electromagnet 18 includes the core 19 and a coil assembly 20. To apply an elastic force in a direction in which each core 19 moves away from each pole piece 15, a spring 42 is disposed between each core 19 and each pole piece 15.

The magnetic substance holder 45 having a combination of a permanent magnet and an electromagnet is configured so that, when no electric current is supplied to each electromagnet 18, each core 19 is separated from each pole piece 15, and the lines of magnetic force of the intermediate permanent magnet 30 pass through the holding face 16 of each pole piece 15. Thereby, a holding force is generated from the holding face 16. In contrast, when the electric current is supplied to each electromagnet 18 and thus each core 19 is magnetized, each core 19 moves to the middle of the coil 21, and the other end of each core 19 comes into contact with each pole piece 15. Here, each pole piece 15 and the yoke 11 are connected by each core 19, and the lines of magnetic force of the intermediate permanent magnet 30 are directed toward the base plate 12 of the yoke 11, so that the holding force is removed from the holding face 16 of each pole piece 15.

A magnetic substance holder 46 having a combination of a permanent magnet and an electromagnet, which is shown in Figs. 52(a) and 52(b), includes a yoke 11, a pair of pole pieces 15 disposed inside the yoke 11, a plurality of first permanent magnets 17 disposed between the yoke 11 and the first pole piece 15, a plurality of second permanent magnets 17 disposed between the yoke 11 and the second pole piece 15, an intermediate permanent magnet 30 disposed between the two pole pieces 15, and an electromagnet control device 24 configured to supply electric current to an electromagnet 18.

The first and second pole pieces 15 are disposed inside the yoke 11 so as to be separated from the yoke 11. Each pole piece 15 has a holding face 16 configured to hold a magnetic substance W. Each pole piece 15 is supported by a support member 29, and is spaced apart from a base plate 12 of the yoke 11. One of the pole pieces 15 is provided with an insertion recess 38 in a side thereof.

The electromagnet 18 includes a core 19 and a coil assembly 20 enclosing the core 19. The coil assembly 20 is made up of a coil 21 configured to supply electric current, and a bobbin 22 that is a nonconductor enclosing the coil 21. The core 19 is configured so that one end thereof is inserted into the insertion recess 38 of the first pole piece 15, and so that the other end thereof is spaced apart from a side of the second pole piece 15 and is movably disposed between the first and second pole pieces 15. A spring 42 is installed between the other end of the core 19 and the second pole piece 15 in order to apply an elastic force to the core 19 in a direction in which the core 19 moves away from the side of the second pole piece 15. This electromagnet 18 is a magnetism omission type electromagnet that the core 19 moves toward the middle of a coil 21 when the electric current is applied to a coil 21.

As shown in Fig. 52(a), when no electric current is supplied to the electromagnet 18, the lines of magnetic force of the permanent magnets 17 and the intermediate permanent magnet 30 pass through the holding faces 16 of the two pole pieces 15, so that the magnetic substance W is held to the two pole pieces 15.

On the other hand, as shown in Fig. 52(b), when electric current is supplied to the electromagnet 18, one end of the core 19 is magnetized to be an S pole opposite a magnetic pole of the intermediate permanent magnet 30 which is in contact with the first pole piece 15, and the other end of the core 19 is magnetized to be an N pole opposite a magnetic pole of the intermediate permanent magnet 30 which is in contact with the second pole piece 15. Then, the core 19 moves toward the middle of the coil 21, and thus the other end of the core 19 comes into contact with the side of the second pole piece 15. Here, the lines of magnetic force of the plurality of permanent magnets 17 and the intermediate permanent magnet 30 are directed to pass through the core 19. Accordingly, a holding force is removed from the holding faces 16 of the two pole pieces 15.

The first type of magnetic substance holder having a combination of a permanent magnet and an electromagnet can be applied to lifts, chucks, locking devices, applied machines, robots, or other various equipment used in the industrial field.

Hereinafter, a variety of embodiments of the second type of magnetic substance holder having a combination of a permanent magnet and an electromagnet in accordance with the present invention will be described with reference to Figs. 53 to 66.

A magnetic substance holder 47 having a combination of a permanent magnet and an electromagnet, which is shown in Figs. 53 and 54, includes a yoke 11, a pair of pole pieces 15 disposed inside the yoke 11, a plurality of permanent magnets 17 disposed between the yoke 11 and each pole piece 15, an intermediate permanent magnet 30 and an electromagnet 18 connecting the two pole pieces 15, and an electromagnet control device 24 configured to supply electric current to the electromagnet 18.

The yoke 11 includes a base plate 12 and a plurality of side plates 13 disposed at an edge of the base plate 12. The base plate 12 and the side plates 13 may be formed in one body. The yoke 11 is formed of a ferromagnetic substance that is magnetized in a direction of a magnetic field when the magnet field is applied from the outside.

The first and second pole pieces 15 are supported on the electromagnet 18, and are disposed inside the yoke 11 so as to be spaced apart from the yoke 11. Each pole piece 15 is provided with a holding face 16 at an end face thereof which is configured to hold a magnetic substance W. Like the yoke 11, each pole piece 15 is also formed of a ferromagnetic substance.

The plurality of permanent magnets 17 are disposed between the side plates 13 of the yoke 11 and sides of the pole pieces 15. The permanent magnets 17 connected to each pole piece 15 are in contact with the pole piece 15 such that their magnetic poles are the same as those of the intermediate permanent magnet 30 which are in contact with the pole piece 15. That is, the N poles of the permanent magnets 17 are in contact with the pole piece 15 abutting on the N pole of the intermediate permanent magnet 30, and the S poles of the permanent magnets 17 are in contact with the pole piece 15 abutting on the S pole of the intermediate permanent magnet 30.

The electromagnet 18 includes a core 19 and a coil assembly 20 enclosing the core 19. The coil assembly 20 is made up of a coil 21 configured to supply electric current and a bobbin 22 that is a nonconductor enclosing the coil 21. One end of the core 19 is in contact with a bottom surface of the first pole piece 15, and the other end of the core 19 is in contact with a bottom surface of the second pole piece 15.

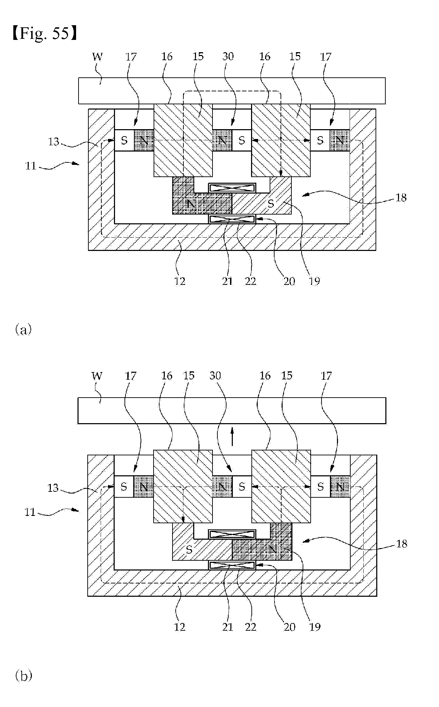

Hereinafter, an operation of the magnetic substance holder 47 having a combination of a permanent magnet and an electromagnet will be described with reference to Figs. 55(a) and 55(b).

As shown in Fig. 55(a), when electric current is supplied to the electromagnet 18 and thus opposite ends of the core 19 are magnetized to be the same magnetic poles as those of the permanent magnets 17 and the intermediate permanent magnet 30 which are in contact with the pole pieces 15 abutting on the opposite ends, the lines of magnetic force of the permanent magnets 17 and the intermediate permanent magnet 30 and the lines of magnetic force of the electromagnet 18 equally pass through the holding faces 16 of the pole pieces 15. In this case, a holding force is generated from the holding face 16 of each pole piece 15, and a magnetic substance W is held to these holding faces 14 and 16.

On the other hand, as shown in Fig. 55(b), when electric current is supplied to the electromagnet 18 and thus the opposite ends of the core 19 are magnetized to be magnetic poles opposite those of the permanent magnets 17 and the intermediate permanent magnet 30 which are in contact with the pole pieces 15 abutting on the opposite ends, the direction of the lines of magnetic force emitting from the permanent magnets 17 and the intermediate permanent magnet 30 is changed. That is, the lines of magnetic force return in the order of the intermediate permanent magnet, the first pole piece, the core, the second pole piece, and the intermediate permanent magnet. In this case, the lines of magnetic force emitting from the permanent magnets 17 and the intermediate permanent magnet 30 do not pass through the holding faces 16 of the pole pieces 15, so that the holding force is removed from the holding faces.

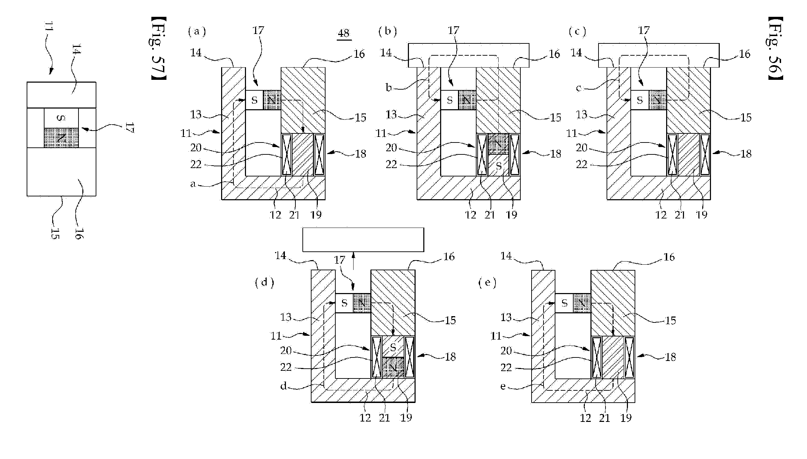

A magnetic substance holder 48 having a combination of a permanent magnet and an electromagnet, which is shown in Figs. 56 and 57, is configured so that a yoke 11 has one base plate 12 and one side plate 13, so that a permanent magnet 17 is disposed between the side plate 13 of the yoke 11 and a side of a pole piece 15, and so that an electromagnet 18 is disposed between the base plate 12 of the yoke 11 and a bottom surface of the pole piece 15.

As shown in Fig. 56(a), when no electric current is supplied to the electromagnet 18, the lines of magnetic force return in the order of the permanent magnet, the pole piece, a core, the yoke, and the permanent magnet. In this case, a slight flow of the lines of magnetic force is present on the holding faces 14 and 16, but a sufficient holding force is not generated. As shown in Fig. 56(b), when electric current is supplied to the electromagnet 18 and thus an end of the core 19 which in contact with the pole piece 15 is magnetized to be an N pole, the direction of the lines of magnetic force is changed to generate a sufficient holding force from the holding faces 14 and 16, so that a magnetic substance W is held. As shown in Fig. 56(c), in the state in which the magnetic substance W is held, when the electric current supplied to the electromagnet 18 is interrupted, the magnetic substance W is kept held. As shown in Fig. 56(d), when electric current is supplied to the electromagnet 18 and thus the end of the core 19 which in contact with the pole piece 15 is magnetized to be an S pole, the direction of the lines of magnetic force is changed again to remove the holding force from the holding faces 14 and 16, so that the magnetic substance W is released. As shown in Fig. 56(e), in the state in which the magnetic substance W is released, when the electric current supplied to the electromagnet 18 is interrupted, the flow direction of the lines of magnetic force is kept changed in Fig. 56(d).

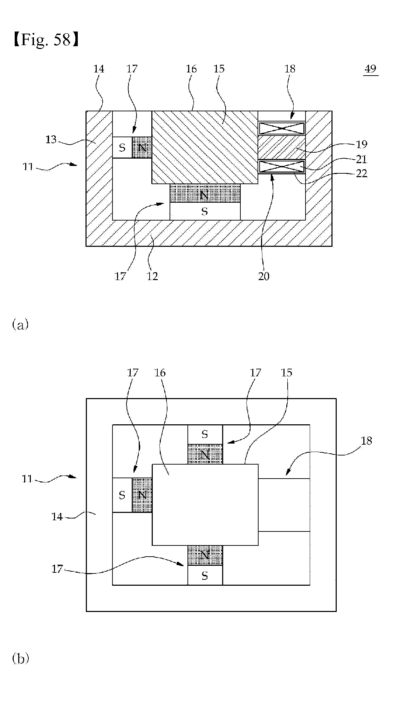

A magnetic substance holder 49 having a combination of a permanent magnet and an electromagnet, which is shown in Figs. 58(a) and 58(b), is configured so that a plurality of permanent magnets 17 are disposed between side plates 13 of a yoke 11 and sides of a pole piece 15, and between a base plate 12 of the yoke 11 and a bottom surface of the pole piece 15, and so that an electromagnet 18 is disposed between the other side plate 13 of the yoke 11 and the other side of the pole piece 15.

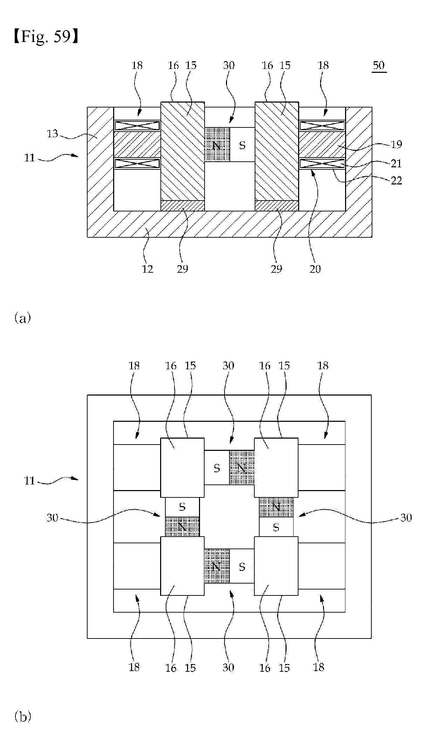

A magnetic substance holder 50 having a combination of a permanent magnet and an electromagnet, which is shown in Figs. 59(a) and 59(b), is configured so that four pole pieces 15 are disposed inside a yoke 11. Each pole piece 15 is supported by a support member 19, and is spaced apart from a base plate 12 of the yoke 11. Each support member 29 may be formed of one of various materials such as plastic that are not influenced by a magnetic field. The support members 29 function to support the respective pole pieces 15 and simultaneously prevent lines of magnetic force passing through the pole pieces from being transmitted to the yoke 11.

Intermediate permanent magnets 30 and an electromagnet 18 are connected to each pole piece 15. The electromagnet 18 is disposed between the yoke 11 and a side of each pole piece 15. The intermediate permanent magnet 30 is disposed between the two neighboring pole pieces 15. The two intermediate permanent magnets 30 are connected to one pole piece 15. The two intermediate permanent magnets 30 connected to one pole piece 15 are configured so that the same magnetic poles thereof are in contact with sides of the pole piece 15. That is, only the N pole of the intermediate permanent magnet 30 or only the S pole of a permanent magnet 17 is in contact with each pole piece 15.

In the magnetic substance holder 49 having a combination of a permanent magnet and an electromagnet, when a holding force is generated from holding faces 16 of the pole pieces 15, an end of each electromagnet 18 which is in contact with the pole piece 15 is magnetized to be the same magnetic pole as those of the intermediate permanent magnets 30 abutting on the pole piece 15. For example, the end of the electromagnet 18 which is in contact with the pole piece 15 abutting on the N pole of the intermediate permanent magnet 30 is magnetized to be the N pole, and the end of the electromagnet 18 which is in contact with the pole piece 15 abutting on the S pole of the intermediate permanent magnet 30 is magnetized to be the S pole.

In contrast, when the holding force is removed from the holding faces 16 of the pole pieces 15, the end of each electromagnet 18 which is in contact with the pole piece 15 is magnetized to be a magnetic pole opposite those of the intermediate permanent magnets 30 abutting on the pole piece 15.

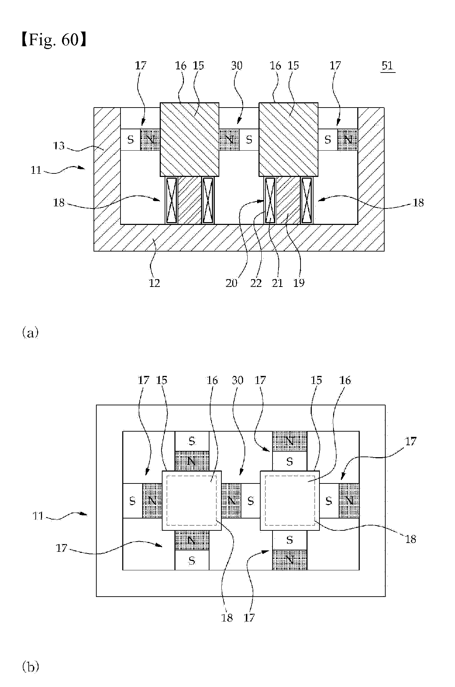

A magnetic substance holder 51 having a combination of a permanent magnet and an electromagnet, which is shown in Figs. 60(a) and 60(b), is configured so that a plurality of pole pieces 15 disposed inside a yoke 11 is connected by an intermediate permanent magnet 30, and so that a plurality of permanent magnets 17 and an electromagnet 18 are disposed to be in contact with sides and bottom surface of each pole piece 15. In detail, the electromagnet 18 is disposed between a side plate 13 of the yoke 11 and the side surface of each pole piece 15, and the permanent magnets 17 are disposed between side plates 13 of the yoke 11 and the sides of each pole piece 15 and between the base plate 12 of the yoke 11 and the bottom surface of each pole piece 15. The intermediate permanent magnet 30 and the permanent magnets 17, both of which are in contact with each pole piece 15, have the same magnetic poles. That is, only the N pole of the intermediate permanent magnet 30 and the N poles of the permanent magnets 17 are in contact with one of the pole pieces 15, and only the S pole of the intermediate permanent magnet 30 and the S poles of the permanent magnets 17 are in contact with the other pole piece 15.

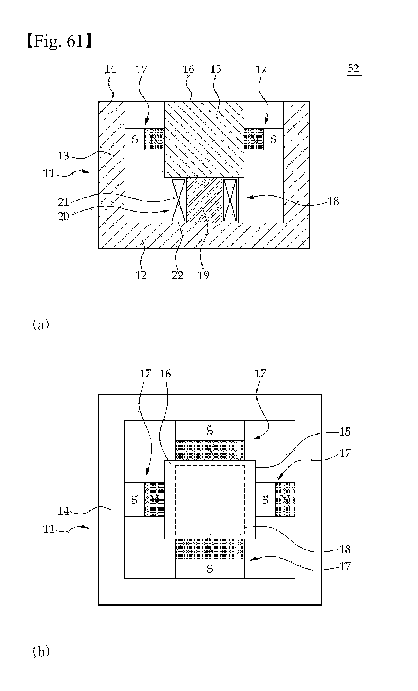

A magnetic substance holder 52 having a combination of a permanent magnet and an electromagnet, which is shown in Figs. 61(a) and 61(b), is configured so that a pole piece 15 disposed inside a yoke 11 is connected with the yoke 11 via a plurality of permanent magnets 17 and an electromagnet 18. The plurality of permanent magnets 17 are disposed between sides of the pole piece 15 and side plates 13 of the yoke 11. The electromagnet 18 is disposed between the yoke 11 and the pole piece 15 such that one end of a core 19 is in contact with a bottom surface of the pole piece 15, and so that the other end of the core 19 is in contact with a base plate of the yoke 11. An N pole of each permanent magnet 17 is in contact with the pole piece 15.

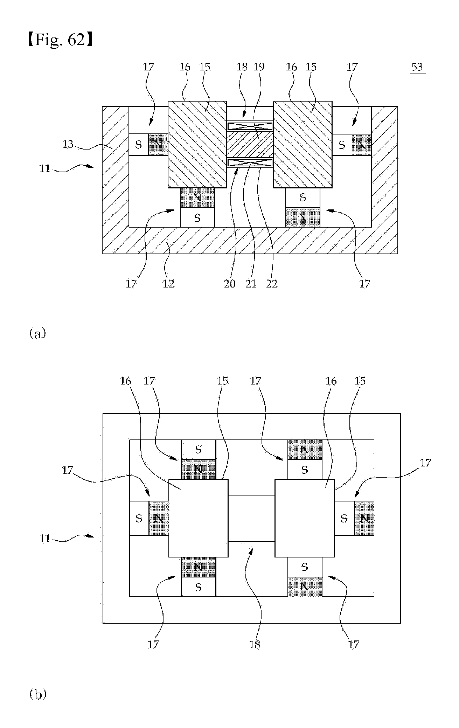

A magnetic substance holder 53 having a combination of a permanent magnet and an electromagnet, which is shown in Figs. 62(a) and 62(b), is configured so that a plurality of pole pieces 15 disposed inside a yoke 11 are connected by an electromagnet 18, and so that a plurality of permanent magnets 17 are disposed between sides and a bottom surface of each pole piece 15. The permanent magnets 17 are disposed between side plates 13 of the yoke 11 and the sides of each pole piece 15, and between a base plate 12 of the yoke 11 and the bottom surface of each pole piece 15. N poles of the permanent magnets 17 which are in contact with each pole piece 15 are the same.

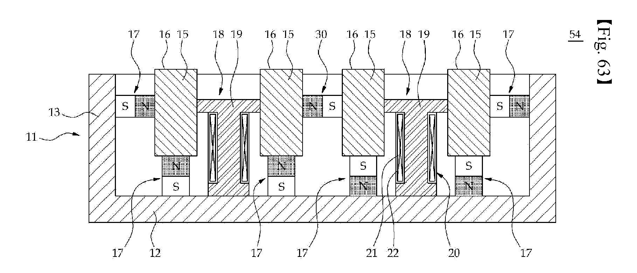

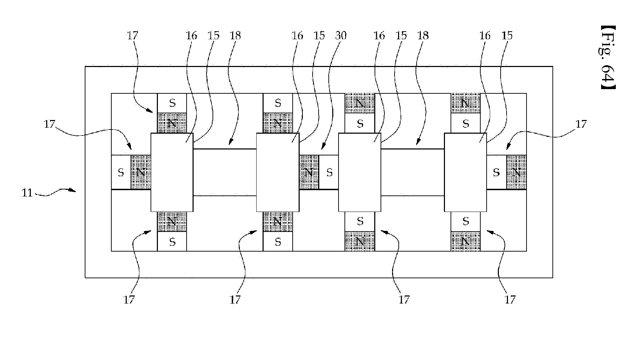

A magnetic substance holder 54 having a combination of a permanent magnet and an electromagnet, which is shown in Figs. 63 and 64, is configured so that a plurality of pole pieces 15 are disposed inside a yoke 11 in a row, and so that a plurality of permanent magnets 17 are disposed between a bottom surface of each pole piece 15 and a base plate 12 of the yoke 11, and between sides of each pole piece 15 and side plates 13 of the yoke 11. An electromagnet 18 or an intermediate permanent magnet 30 is disposed between the two neighboring pole pieces 15. The single electromagnet 18 and the two pole pieces 15 connected by the electromagnet 18 may be treated as one group, and the neighboring groups are connected via the intermediate permanent magnet 30.

The electromagnet 18 is disposed between the two pole pieces 15 such that one end of a core 19 is in contact with the base plate 12 of the yoke 11, and so that the other end of the core 19 is in contact with sides of the two neighboring pole pieces 15 at the same time. The same magnetic poles of the permanent magnet 17 and the intermediate permanent magnet 30 are in contact with each pole piece 15 abutting on the other end of the core 19. That is, only N poles of the permanent magnet 17 and the intermediate permanent magnet 30 are in contact with the two pole pieces 15 connected by one of the cores 19, and only S poles of the permanent magnet 17 and the intermediate permanent magnet 30 are in contact with the two pole pieces 15 connected by the other core 19.

In the magnetic substance holder 53 having a combination of a permanent magnet and an electromagnet, when the other end of each core 19 is magnetized to be the same magnetic pole as that of the permanent magnet 17 which is in contact with the pole piece 15 connected to the other end, a holding force is generated from a holding face of each pole piece 15. In contrast, when the other end of each core 19 is magnetized to be a magnetic pole opposite that of the permanent magnet 17 which is in contact with the pole piece 15 connected to the other end, the holding force is removed from the holding face of each pole piece 15.

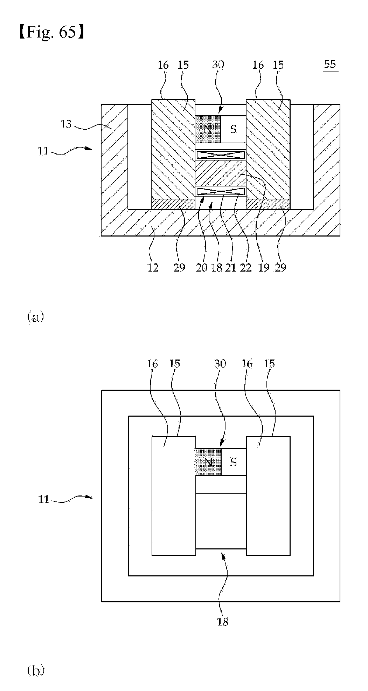

A magnetic substance holder 55 having a combination of a permanent magnet and an electromagnet, which is shown in Figs. 65(a) and 65(b), is configured so that a plurality of pole pieces 15 disposed inside a yoke 11 are connected by an electromagnet 18 and an intermediate permanent magnet 30. Each pole piece 15 is supported by a support member 29 coupled to a base plate 12 of the yoke 11, and is spaced apart from the base plate 12 of the yoke 11. When electric current is supplied to the electromagnet 18 and thus opposite ends of the electromagnet 18 are magnetized to be the same magnetic poles as those of the intermediate permanent magnet 30 which are in contact with the respective pole pieces 15 connected to the opposite ends, the lines of magnetic force emitting from the intermediate permanent magnet 30 and the lines of magnetic force emitting from the electromagnet 18 pass through a holding face 16 of each pole piece 15. Thereby, a holding force is generated from the holding face 16 of each pole piece 15.

On the other hand, when electric current is supplied to the electromagnet 18 and thus the ends of the electromagnet 18 are magnetized to be the magnetic poles opposite those of the intermediate permanent magnet 30 which are in contact with the respective pole pieces 15 connected to the opposite ends, the lines of magnetic force emitting from the intermediate permanent magnet 30 are changed in direction, so that the holding force is generated from the holding face 16 of each pole piece 15.

In this embodiment, a plurality of permanent magnets 17 may be disposed between each pole piece 15 and the yoke 11. In this case, the magnetic pole of each permanent magnet 17 which is in contact with each pole piece 15 should be the same as that of the intermediate permanent magnet 30 which is in contact with each pole piece 15.

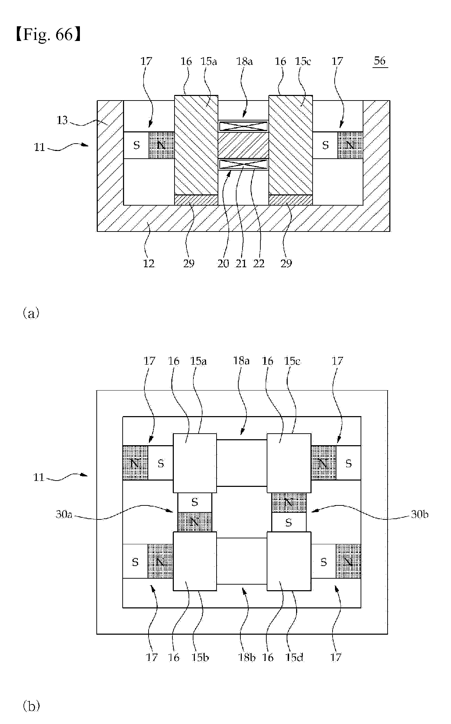

A magnetic substance holder 56 having a combination of a permanent magnet and an electromagnet, which is shown in Figs. 66(a) and 66(b), is configured so that four pole pieces 15a, 15b, 15c and 15d are disposed inside a yoke 11, and are connected by electromagnets 18a and 18b or intermediate permanent magnets 30a and 30b. Sides of the pole pieces 15a, 15b, 15c and 15d are connected with side plates 13 of the yoke 11 via permanent magnets 17. One of the four pole pieces is disposed to face two of the other three pole pieces 15.

The first pole piece 15a is connected with the second pole piece 15b by the first intermediate permanent magnet 30a as well as with the third pole piece 15c by the first electromagnet 18a. The second pole piece 15b is connected with the first pole piece 15a by the first intermediate permanent magnet 30a as well as with the fourth pole piece 15d by the second electromagnet 18b. The fourth pole piece 15d is connected with the second pole piece 15b by the second electromagnet 18b as well as with the third pole piece 15c by the second intermediate permanent magnet 30b. Here, the first intermediate permanent magnet 30a is disposed so that an N pole thereof is in contact with the second pole piece 15b, and so that an S pole thereof is in contact with the first pole piece 15a. The second intermediate permanent magnet 30b is disposed so that an N pole thereof is in contact with the third pole piece 15c, and so that an S pole thereof is in contact with the fourth pole piece 15d.

The same magnetic pole of each permanent magnet 17 as that of the intermediate permanent magnet which is in contact with the pole piece abutting on each permanent magnet 17 is in contact with the pole piece. That is, the S pole of the permanent magnet 17 is in contact with the first pole piece 15a, and the N pole of the permanent magnet 17 is in contact with the second pole piece 15b. Further, the N pole of the permanent magnet 17 is in contact with the third pole piece 15c, and the S pole of the permanent magnet 17 is in contact with the fourth pole piece 15d.

In this magnetic substance holder 56 having a combination of a permanent magnet and an electromagnet, when the electromagnets 18a and 18b are magnetized such that ends thereof become the same magnetic poles as those of the intermediate permanent magnets which are in contact with the pole pieces adjacent to the respective ends of the electromagnets 18a and 18b, the lines of magnetic force emitted from the intermediate permanent magnets 30a and 30b, the permanent magnets 17, and the electromagnets 18a and 18b pass through the holding face 16 of each of the pole pieces 15a, 15b, 15c and 15d, and thus a holding force is generated. That is, when the end of the first electromagnet 18a which is in contact with the first pole piece 15a is magnetized to be the S pole, and when the end of the second electromagnet 18b which is in contact with the second pole piece 15b is magnetized to be the N pole, and thus the holding force is generated from the holding face 16 of each of the pole pieces 15a, 15b, 15c and 15d.

In contrast, when the electromagnets 18a and 18b are magnetized such that the ends thereof become the magnetic poles opposite those of the intermediate permanent magnets which are in contact with the pole pieces adjacent to the respective ends of the electromagnets 18a and 18b, the lines of magnetic force emitted from the intermediate permanent magnets 30a and 30b and the permanent magnets 17 are changed in direction, so that the holding force is removed. That is, when the end of the first electromagnet 18a which is in contact with the first pole piece 15a is magnetized to be the N pole, and when the end of the second electromagnet 18b which is in contact with the second pole piece 15b is magnetized to be the S pole, and thus the holding force is removed from the holding face 16 of each of the pole pieces 15a, 15b, 15c and 15d.

The second type of magnetic substance holder having a combination of a permanent magnet and an electromagnet can be applied to lifts, chucks, locking devices, applied machines, robots, or other various equipment used in the industrial field.

Hereinafter, a variety of embodiments of the third type of magnetic substance holder having a combination of a permanent magnet and an electromagnet in accordance with the present invention will be described with reference to Figs. 67 to 75.

A magnetic substance holder 57 having a combination of a permanent magnet and an electromagnet, which is shown in Figs. 67 and 68, is generally divided into a first magnet module 58 and a second magnet module 67. The first magnet module 58 includes a yoke 59, a pole piece 63 disposed inside the yoke 59, and a plurality of permanent magnets 65 disposed between the yoke 59 and the pole piece 63. The second magnet module 67 includes a yoke 68, an electromagnet 72 disposed inside the yoke 68, and an electromagnet control device 78 configured to supply electric current to the electromagnet 72.

The yokes 59 and 68 of the first and second magnet modules 58 and 67 have base plates 60 and 69 and side plates 61 and 70 disposed at edges of the base plates 60 and 69, respectively. The base plates 60 and 69 and the side plates 61 and 70 may be formed in one body. The side plates 61 and 70 are provided with holding faces 62 and 71 on end faces thereof. These yoke 59 and 68 are formed of a ferromagnetic substance that is magnetized in a direction of a magnetic field when the magnet field is applied from the outside.

The pole piece 63 is disposed inside the yoke 11 so as to be spaced apart from the yoke 11. One end face of the pole piece 63 has the holding face 64. The pole piece 63 is formed of a ferromagnetic substance magnetized in a direction of a magnetic field when the magnet field is applied from the outside. The plurality of permanent magnets 65 are disposed between sides of the pole piece 63 and the side plates 61 of the yoke 59, and between a bottom surface of the pole piece 63 and the base plate 60 of the yoke 59.

The electromagnet 72 includes a core 73 and a coil assembly 75 enclosing the core 73. The coil assembly 75 is made up of a coil 76 configured to supply electric current and a bobbin 77 that is a nonconductor enclosing the coil 76. One end of the core 73 is held to the base plate 69 of the yoke 68, and the other end of the core 73 is provided with a holding face 74.

In the magnetic substance holder 57 having a combination of a permanent magnet and an electromagnet, when no electric current is supplied to the electromagnet 72, the lines of magnetic force of the permanent magnets 65 pass through the pole piece 63, the core 73, the yoke 68 of the second magnet module 67, and the yoke 59 of the first magnet module 58, thereby forming a closed loop. In this case, a holding force is generated between the holding faces 62 and 71 of the two yokes 59 and 68, and between the holding face 64 of the pole piece 63 and the holding face 74 of the core 73, so that these are closely attached to each other. In this state, when electric current is supplied to the electromagnet 72 and thus the end of the core 73 which has the holding face 74 is magnetized to be a magnetic pole opposite those of the permanent magnets 65 which are in contact with the pole piece 63, a holding force between the first and second magnet modules 58 and 67 can be increased.

On the other hand, as shown in Fig. 68, when electric current is supplied to the electromagnet 72 and thus the end of the core 73 which has the holding face 74 is magnetized to be the same N pole as those of the permanent magnets 65 which are in contact with the pole piece 63, a repulsive force is generated between the holding faces 62 and 71 of the two yokes 59 and 68, and between the holding face 64 of the pole piece 63 and the holding face 74 of the core 73. Thus, the holding force between the first and second magnet modules 58 and 67 is removed. When the first and second magnet modules 58 and 67 are separated, electric current is supplied to the electromagnet 72 and thus the end of the core 73 which has the holding face 74 is magnetized to be the magnetic pole opposite those of the permanent magnets 65 which are in contact with the pole piece 63. Thereby, the first and second magnet modules 58 and 67 can be held again.

The magnetic substance holder 57 having a combination of a permanent magnet and an electromagnet may be installed so that one of the first and second magnet modules 58 and 67 is fixed and the other is movable, or so that the first and second magnet modules 58 and 67 are fixed in contact with each other. When all the first and second magnet modules 58 and 67 are fixed, the holding force between the first and second magnet modules 58 and 67 is generated or removed without mechanical movement according to a magnetized state of the electromagnet 72.

When one of the first and second magnet modules 58 and 67 is movable, a return device such as a spring may be installed to return the module shifted when the electromagnet 72 is magnetized in its original state. Alternatively, electric current may be supplied to the electromagnet 72 and thus the lines of magnetic force may be formed so as to return in the order of the permanent magnet, the pole piece, the core, and the permanent magnet. Thereby, the shifted module may be shifted to the other fixed module using a magnetic force.

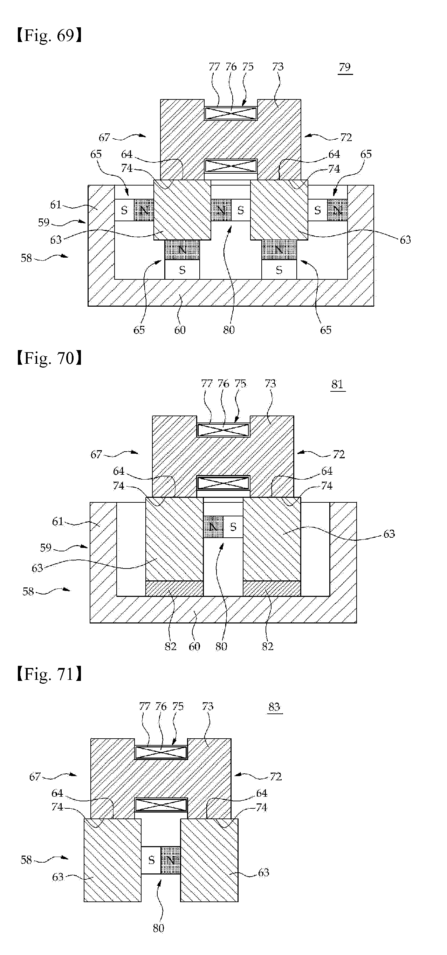

A magnetic substance holder 79 having a combination of a permanent magnet and an electromagnet, which is shown in Fig. 69, is configured so that a plurality of pole pieces 63, a plurality of permanent magnets 65, and an intermediate permanent magnet 80 are disposed inside a yoke 59 of a first magnet module 58, and so that a second magnet module 67 includes an electromagnet 72 and an electromagnet control device (not shown). The plurality of pole pieces 63 are connected by the intermediate permanent magnet 80. N poles of the permanent magnets 65 are in contact with the pole piece 63 abutting on an N pole of the intermediate permanent magnet 80, and S poles of the permanent magnets 65 are in contact with the pole piece 63 abutting on an S pole of the intermediate permanent magnet 80. An end face of each pole piece 63 is provided with a holding face 64, and opposite end faces of the core 73 are provided with holding faces 74 corresponding to the holding faces 64 of the respective pole pieces 63.

In the magnetic substance holder 79 having a combination of a permanent magnet and an electromagnet, when no electric current is supplied to the electromagnet 72, or when electric current is supplied to the electromagnet 72 and opposite ends of the core 73 are magnetized to be magnetic poles opposite those of the permanent magnets 65 and the intermediate permanent magnet 80 held to the respective pole pieces 63 facing the opposite ends, a holding force is generated between the first and second magnet modules 58 and 67. In contrast, when electric current is supplied to the electromagnet 72 and the opposite ends of the core 73 are magnetized to be the same magnetic poles as those of the permanent magnets 65 and the intermediate permanent magnet 80 held to the respective pole pieces 63, the holding force is removed between the first and second magnet modules 58 and 67.

A magnetic substance holder 81 having a combination of a permanent magnet and an electromagnet, which is shown in Fig. 70, is configured so that a first magnet module 58 includes a plurality of pole pieces 63 disposed inside a yoke 59 and an intermediate permanent magnet 80 connecting the pole pieces 63. A support member 81 is disposed between each pole piece 63 and a base plate 60 of the yoke 59, and supports the pole piece 63 so as to be spaced apart from the yoke 59. A second magnet module 67 is similar to that shown in Fig. 69.

In the magnetic substance holder 81 having a combination of a permanent magnet and an electromagnet, when no electric current is supplied to the electromagnet 72, or when electric current is supplied to the electromagnet 72 and opposite ends of the core 73 are magnetized to be magnetic poles opposite those of the permanent magnets 65 and the intermediate permanent magnet 80 held to the respective pole pieces 63 facing the opposite ends, a holding force is generated between the first and second magnet modules 58 and 67. In contrast, when the electromagnet 72 is magnetized reversely, the holding force is removed between the first and second magnet modules 58 and 67.

A magnetic substance holder 83 having a combination of a permanent magnet and an electromagnet, which is shown in Fig. 71, is configured so that a first magnet module 58 includes a pair of pole pieces 63 without a yoke, and an intermediate permanent magnet 80 connecting the pole pieces. A second magnet module 67 is similar to that shown in Fig. 69. In the magnetic substance holder 83 having a combination of a permanent magnet and an electromagnet, when no electric current is supplied to the electromagnet 72, or when electric current is supplied to the electromagnet 72 and opposite ends of the core 73 are magnetized to be magnetic poles opposite those of the permanent magnets 65 and the intermediate permanent magnet 80 held to the respective pole pieces 63 facing the opposite ends, a holding force is generated between the first and second magnet modules 58 and 67. In contrast, when the electromagnet 72 is magnetized reversely, the holding force is removed between the first and second magnet modules 58 and 67.

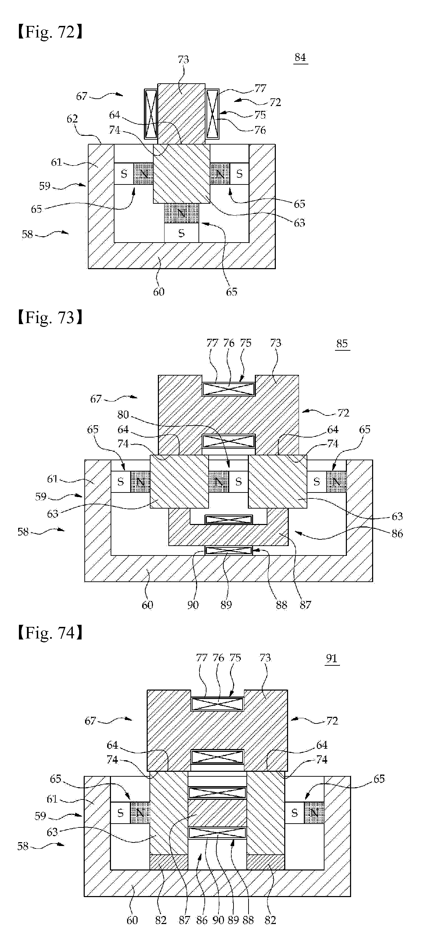

A magnetic substance holder 84 having a combination of a permanent magnet and an electromagnet, which is shown in Fig. 72, is configured so that a first magnet module 58 includes a pole piece 63 disposed inside a yoke 59 so as to be spaced apart from the yoke 59, and a plurality of permanent magnets 65 connecting the pole piece 63 and the yoke 59. The permanent magnets 65 are disposed between side plates 60 of the yoke 59 and sides of the pole piece 63, and between a base plate 61 of the yoke 59 and a bottom surface of the pole piece 63. A second magnet module 67 includes an electromagnet 72 and an electromagnet control device (not shown). The electromagnet 72 includes a core 73 and a coil assembly 75. One end of the core 73 is provided with a holding face 74 facing a holding face 64 of the pole piece 63.

A magnetic substance holder 85 having a combination of a permanent magnet and an electromagnet, which is shown in Fig. 73, is configured so that a first magnet module 58 includes a plurality of pole pieces 63 disposed inside a yoke 59, a plurality of permanent magnets 65 connecting the respective pole pieces 63 and the yoke 59, an intermediate permanent magnet 80 connecting the two pole pieces 63, and an auxiliary electromagnet 86 connecting the two pole pieces 63. The auxiliary electromagnet 86 includes a core 87 and a coil assembly 88 enclosing the coil 86. The coil assembly 88 includes a coil 89 and a bobbin 90 enclosing the coil 89. The core 87 of the auxiliary electromagnet 86 are configured so that opposite ends thereof are in contact with respective bottom surfaces of the two pole pieces 63. Although not shown, the first magnet module 58 has an electromagnet control device configured to supply electric current to the auxiliary electromagnet 86. A second magnet module 67 is similar to that shown in Fig. 69.

In the magnetic substance holder 85 having a combination of a permanent magnet and an electromagnet, when electric current is supplied to the auxiliary electromagnet 86 of the first magnet module 58 and the opposite ends of the core 87 are magnetized to be the same magnetic poles as those of the permanent magnets 65 and the intermediate permanent magnet 80 which are in contact with the respective pole pieces 63 facing the opposite ends, and simultaneously when no electric current is supplied to the electromagnet 72 of the second magnet module 67, or when electric current is supplied to the electromagnet 72 of the second magnet module 67 and the opposite ends of the core 73 are magnetized to be magnetic poles opposite those of the permanent magnets 65 and the intermediate permanent magnet 80 which are in contact with the respective pole pieces 63 facing the opposite ends, a holding force is generated between the first and second magnet modules 58 and 67.

In the state in which the electric current is supplied to the auxiliary electromagnet 86 of the first magnet module 58 and the opposite ends of the core 87 are magnetized to be the same magnetic poles as those of the permanent magnets 65 and the intermediate permanent magnet 80 which are in contact with the respective pole pieces 63 facing the opposite ends, when electric current is supplied to the electromagnet 72 of the second magnet module 67 and the opposite ends of the core 73 are magnetized to be the same magnetic poles as those of the permanent magnets 65 and the intermediate permanent magnet 80 which are in contact with the respective pole pieces 63 facing the opposite ends, the holding force is removed between the first and second magnet modules 58 and 67.

A magnetic substance holder 91 having a combination of a permanent magnet and an electromagnet, which is shown in Fig. 74, is configured so that a first magnet module 58 includes a plurality of pole pieces 63 disposed inside a yoke 59, a plurality of permanent magnets 65 connecting the respective pole pieces 63 and the yoke 59, and an auxiliary electromagnet 86 connecting the two pole pieces 63. A support member 81 is disposed between each pole piece 63 and a base plate 60 of the yoke 59, and supports the pole piece 63 so as to be spaced apart from the yoke 59. Although not shown, the first magnet module 58 has an electromagnet control device configured to supply electric current to the auxiliary electromagnet 86. A second magnet module 67 is structurally similar to that shown in Fig. 69.

In the magnetic substance holder 91 having a combination of a permanent magnet and an electromagnet, when electric current is supplied to the auxiliary electromagnet 86 of the first magnet module 58 and the opposite ends of the core 87 are magnetized to be the same magnetic poles as those of the permanent magnets 65 which are in contact with the respective pole pieces 63 facing the opposite ends, and simultaneously when no electric current is supplied to the electromagnet 72 of the second magnet module 67, or when electric current is supplied to the electromagnet 72 of the second magnet module 67 and the opposite ends of the core 73 are magnetized to be magnetic poles opposite those of the permanent magnets 65 which are in contact with the respective pole pieces 63 facing the opposite ends, a holding force is generated between the first and second magnet modules 58 and 67.

In the state in which the electric current is supplied to the auxiliary electromagnet 86 of the first magnet module 58 and the opposite ends of the core 87 are magnetized to be the same magnetic poles as those of the permanent magnets 65 which are in contact with the respective pole pieces 63 facing the opposite ends, when electric current is supplied to the electromagnet 72 of the second magnet module 67 and the opposite ends of the core 73 are magnetized to be the same magnetic poles as those of the permanent magnets 65 which are in contact with the respective pole pieces 63 facing the opposite ends, the holding force is removed between the first and second magnet modules 58 and 67.

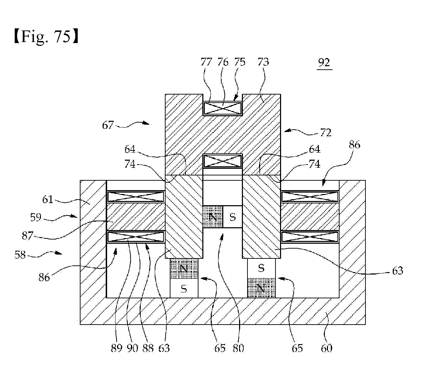

A magnetic substance holder 92 having a combination of a permanent magnet and an electromagnet, which is shown in Fig. 75, is configured so that a first magnet module 58 includes a plurality of pole pieces 63 disposed inside a yoke 59, a plurality of permanent magnets 65 connecting bottom surfaces of the respective pole pieces 63 and a base plate 60 of the yoke 59, an intermediate permanent magnet 80 connecting the two pole pieces 63, and a plurality of auxiliary electromagnet 86 connecting sides of the respective pole pieces 63 and side plates 61 of the yoke 59. The same magnetic pole of each permanent magnet 65 as that of the intermediate permanent magnet 80 which is in contact with each pole piece 63 abutting on the permanent magnet 65 is in contact with the pole piece 63. Although not shown, the first magnet module 58 has an electromagnet control device configured to supply electric current to the auxiliary electromagnet 86. A second magnet module 67 is similar to that shown in Fig. 69.

In the magnetic substance holder 92 having a combination of a permanent magnet and an electromagnet, when one end of each auxiliary electromagnet 86 of the first magnet module 58 which is in contact with the pole piece 63 is magnetized to be the same magnetic pole as those of the permanent magnets 65 and the intermediate permanent magnet 80 which are in contact with the pole piece 63 facing the one end, and simultaneously when no electric current is supplied to the electromagnet 72 of the second magnet module 67, or when electric current is supplied to the electromagnet 72 of the second magnet module 67 and the opposite ends of the core 73 are magnetized to be magnetic poles opposite those of the permanent magnets 65 and the intermediate permanent magnet 80 which are in contact with the respective pole pieces 63 facing the opposite ends, a holding force is generated between the first and second magnet modules 58 and 67.

Further, in the state in which the auxiliary electromagnets 86 of the first magnet module 58 are magnetized to be the same magnetic poles as those of the permanent magnets 65 which are in contact with the respective pole pieces 63 facing the respect auxiliary electromagnets 86, when electric current is supplied to the electromagnet 72 of the second magnet module 67 and thus the opposite ends of the core 73 are magnetized to be magnetic poles opposite those of the permanent magnets 65 and the intermediate permanent magnet 80 which are in contact with the respective pole pieces 63 facing the opposite ends, the holding force is removed between the first and second magnet modules 58 and 67.

The third type of magnetic substance holder having a combination of a permanent magnet and an electromagnet can be applied to lifts, chucks, locking devices, applied machines, robots, or other various equipment used in the industrial field.

While exemplary embodiments of the invention have been shown and described herein, the present invention is not limited to these embodiments. It will be apparent to those skilled in the art that various modifications and variations can be made in the present invention without departing from the spirit or scope of the invention. Thus, such modification and variations are construed as falling within the scope of the appended claims.

## Claims

1. A magnetic substance holder comprising:
a permanent magnet;
a pole piece coupled with one of an N pole and an S pole of the permanent magnet, and having a holding face;
a magnetizable material disposed such that one end face thereof is in contact with the pole piece;
a coil enclosing the magnetizable material; and
a control device controlling magnetization of the magnetizable material by controlling electric current flowing through the coil.

2. The magnetic substance holder according to claim 1, wherein the control device applies electric current to the coil to form the same pole as the pole of the permanent magnet coupled with the pole piece on one end face of the magnetizable material which abuts on the pole piece, such that the magnetic substance holder holds the magnetic substance to the holding face of the pole piece.

3. The magnetic substance holder according to claim 1, wherein the control device applies electric current to the coil to form the pole different from the pole of the permanent magnet coupled with the pole piece on one end face of the magnetizable material which abuts on the pole piece, such that the magnetic substance holder releases the magnetic substance from the holding face of the pole piece.

4. A magnetic substance holder comprising:
a permanent magnet;
a first pole piece coupled to one of an N pole and an S pole of the permanent magnet, and including a holding face;
a second pole piece coupled to the other of the N pole and the S pole of the permanent magnet, and including a holding face;
a magnetizable material disposed such that one end face thereof is in contact with the first pole piece and the other end face thereof is in contact with the second pole piece;
a coil enclosing the magnetizable material; and
a control device controlling magnetization of the magnetizable material by controlling electric current flowing through the coil.

5. The magnetic substance holder according to claim 4, wherein the control device applies electric current to the coil to form the same pole as the pole of the permanent magnet coupled with the first pole piece on one end face of the magnetizable material which abuts on the first pole piece, such that the magnetic substance holder holds the magnetic substance to the holding faces of the first pole piece and the second pole piece.

6. The magnetic substance holder according to claim 5, wherein the control device interrupts electric current applied to the coil after the magnetic substance is held to the holding faces of the first pole piece and the second pole piece.

7. The magnetic substance holder according to claims 4 to 6, wherein the control device applies electric current to the coil to form a pole different from the pole of the permanent magnet coupled with the first pole piece on the one end face of the magnetizable material which abuts on the first pole piece, such that the magnetic substance holder releases the magnetic substance from the holding faces of the first pole piece and the second pole piece.

8. The magnetic substance holder according to claim 7, wherein the control device interrupts electric current applied to the coil after the magnetic substance is released from the holding faces of the first pole piece and the second pole piece.

9. The magnetic substance holder according to claim 4, wherein the control device applies to the coil to form the same pole as the pole of the permanent magnet coupled with the first pole piece on one end face of the magnetizable material which abut on the first pole when a substance holder is hold on the holding faces of the first pole piece and the second pole piece, such that the magnetic substance is more strongly held to the holding faces of the first pole piece and the second pole piece.

10. A magnetic substance holder comprising:
a first permanent magnet;
a second permanent magnet;
a first pole piece coupled to one of an N pole and an S pole of the first permanent magnet, and including a holding face;
a second pole piece coupled to pole of the second permanent magnet which is different from the pole of the first permanent magnet coupled with the first pole piece, and including a holding face;
a magnetizable material disposed such that one end face thereof is in contact with the first pole piece and the other end face thereof is in contact with the second pole piece;
a coil enclosing the magnetizable material; and
a control device controlling magnetization of the magnetizable material by controlling electric current flowing through the coil.

11. The magnetic substance holder according to claim 10, wherein the control device applies electric current to the coil to form the same pole as the pole of the first permanent magnet coupled with the first pole piece on the one end face of the magnetizable material which abuts on the first pole piece, such that the magnetic substance holder holds the magnetic substance to the holding faces of the first pole piece and the second pole piece.

12. The magnetic substance holder according to claim 11, wherein the control device interrupts electric current applied to the coil after the magnetic substance is held to the holding faces of the first pole piece and the second pole piece.

13. The magnetic substance holder according to claims 10 to 12, wherein the control device applies electric current to the coil to form a pole different from the pole of the first permanent magnet coupled with the first pole piece on the one end face of the magnetizable material which abuts on the first pole piece, such that the magnetic substance holder releases the magnetic substance from the holding faces of the first pole piece and the second pole piece.

14. The magnetic substance holder according to claim 13, wherein the control device interrupt electric current applied to the coil after the magnetic substance is released from the holding faces of the first pole piece and the second pole piece.

15. The magnetic substance holder according to claim 10, wherein the control device applies to the coil to form the same pole as the pole of the first permanent magnet coupled with the first pole piece on one end face of the magnetizable material which abut on the first pole when the magnetic substance is held to the holding faces of the first pole piece and the second pole piece, such that the magnetic substance is more strongly held to the holding faces of the first pole piece and the second pole piece.

16. A magnetic substance holder comprising:
a permanent magnet;
a first pole piece coupled to one of an N pole and an S pole of the permanent magnet, and including a holding face;
a second pole piece coupled to a pole of the permanent magnet which is different from the pole of the permanent magnet coupled with the first pole piece, and including a holding face;
a magnetizable material disposed such that one end face thereof is in contact with the first pole piece and the other end face thereof is opposite to the second pole piece with a predetermined gap;
a coil enclosing the magnetizable material; and
a control device controlling magnetization of the magnetizable material by controlling electric current flowing through the coil.

17. The magnetic substance holder according to claim 16, wherein the control device applies electric current to the coil to form a pole different from the pole of the permanent magnet coupled with the first pole piece on the one end face of the magnetizable material which abuts on the first pole piece, such that the magnetic substance holder releases the magnetic substance from the holding faces of the first pole piece and the second pole piece.

18. The magnetic substance holder according to claim 16, wherein the control device applies to the coil to form the same pole as the pole of the permanent magnet coupled with the first pole piece on one end face of the magnetizable material which abut on the first pole, such that the magnetic substance is more strongly held to the holding faces of the first pole piece and the second pole piece.

19. The magnetic substance holder according to claim 16, wherein the control device interrupt electric current applied to the coil after the magnetic substance is held to the holding faces of the first pole piece and the second pole piece.

20. A magnetic substance holder comprising:
a first permanent magnet;
a second permanent magnet;
a first pole piece coupled to one of an N pole and an S pole of the first permanent magnet, and including a holding face;
a second pole piece coupled to a pole of the second permanent magnet which is different from the pole of the first permanent magnet coupled with the first pole piece, and including a holding face;
a magnetizable material disposed such that one end face thereof is in contact with the first pole piece and the other end face thereof is opposite to the second pole piece with a predetermined gap;
a coil enclosing the magnetizable material; and
a control device controlling magnetization of the magnetizable material by controlling electric current flowing through the coil.

21. The magnetic substance holder according to claim 20, wherein the control device applies electric current to the coil to form a pole different from the pole of the first permanent magnet coupled with the first pole piece on one end face of the magnetizable material which abuts on the first pole piece, such that the magnetic substance holder releases the magnetic substance from the holding faces of the first pole piece and the second pole piece.

22. The magnetic substance holder according to claim 20, wherein the control device applies electric current to the coil to form the same pole as the pole of the first permanent magnet coupled with the first pole piece on one end face of the magnetizable material which abut on the first pole such that the magnetic substance is more strongly held to the holding faces of the first pole piece and the second pole piece.

23. The magnetic substance holder according to claim 20, wherein the control device interrupts electric current applied to the coil after the magnetic substance is held to the holding faces of the first pole piece and the second pole piece.

24. A magnetic substance holder comprising:
a permanent magnet;
a first pole piece coupled to one of an N pole and an S pole of the permanent magnet, and including a holding face and an insertion recess;
a second pole piece coupled to a pole of the permanent magnet which is different from the pole of the permanent magnet coupled with the first pole piece, and including a holding face;
a magnetizable material allowed to move between the first pole piece and the second pole piece in state that one end face thereof is inserted into the insertion recess in contact with the first pole piece;
a coil enclosing the magnetizable material; and
a control device controlling magnetization of the magnetizable material by controlling electric current flowing through the coil.

25. The magnetic substance holder according to claim 24, wherein the control device applies electric current to the coil to form the same pole as the pole of the permanent magnet coupled with the first pole piece on one end face of the magnetizable material which abuts on the first pole piece such that the magnetic substance holder holds a magnetic substance to the holding faces of the first pole piece and the second pole piece.

26. The magnetic substance holder according to claim 25, wherein the control device interrupts electric current applied to the coil after the magnetic substance is held to the holding faces of the first pole piece and the second pole piece.

27. The magnetic substance holder according to claims 24 to 26, wherein the control device applies electric current to the coil to form a pole different from the pole of the permanent magnet coupled with the first pole piece on the one end face of the magnetizable material which abuts on the first pole piece, such that the magnetic substance holder releases the magnetic substance from the holding faces of the first pole piece and the second pole piece.

28. The magnetic substance holder according to claim 24, wherein the control device applies to the coil to form the same pole as the pole of the permanent magnet coupled with the first pole piece on one end face of the magnetizable material which abut on the first pole, such that the magnetic substance is more strongly held to the holding faces of the first pole piece and the second pole piece.

29. The magnetic substance holder according to claim 24, wherein the control device applies to the coil to form the same pole as the pole of the permanent magnet coupled with the first pole piece on one end face of the magnetizable material which abut on the first pole when the magnetic substance is held to the holding faces of the first pole piece and the second pole piece, such that the magnetic substance is more strongly held to the holding faces of the first pole piece and the second pole piece.

30. A magnetic substance holder comprising:
a first permanent magnet and a second permanent magnet;
a first pole piece coupled to one of an N pole and an S pole of the permanent magnet, and including a holding face and an insertion recess;
a second pole piece coupled to the pole of the second permanent magnet which is different pole from the pole of the first permanent magnet coupled with the first pole piece, and including a holding face;
a magnetizable material configured such that the magnetizable material is movable between the first pole piece and the second pole piece in contact with the first pole piece by inserting one end face thereof into the insertion recess;
a coil enclosing the magnetizable material; and
a control device controlling magnetization of the magnetizable material by controlling electric current flowing through the coil.

31. The magnetic substance holder according to claim 30, wherein the control device applies electric current to the coil to form the same pole as the pole of the first permanent magnet coupled with the first pole piece on the one end face of the magnetizable material which abuts on the first pole piece, such that the magnetic substance holder holds the magnetic substance to the holding faces of the first pole piece and the second pole piece.

32. The magnetic substance holder according to claim 31, wherein the control device interrupts electric current applied to the coil after the magnetic substance is held to the holding faces of the first pole piece and the second pole piece.

33. The magnetic substance holder according to claims 30 to 32, wherein the control device applies electric current to the coil to form a pole different from the pole of the first permanent magnet coupled with the first pole piece on the one end face of the magnetizable material which abuts on the first pole piece, such that the magnetic substance holder releases the magnetic substance from the holding faces of the first pole piece and the second pole piece.

34. The magnetic substance holder according to claim 33, wherein the control device interrupts electric current applied to the coil after the magnetic substance is released from the holding faces of the first pole piece and the second pole piece.

35. The magnetic substance holder according to claim 30, wherein the control device applies to the coil to form the same pole as the pole of the first permanent magnet coupled with the first pole piece on one end face of the magnetizable material which abut on the first pole when the magnetic substance is held to the holding faces of the first pole piece and the second pole piece, such that the magnetic substance is more strongly held to the holding faces of the first pole piece and the second pole piece.

36. A magnetic substance holder including combination of a permanent magnet and an electromagnet comprising:
a yoke;
a pole piece disposed to space apart from the yoke, and including a holding face for holding a magnetic substance;
a permanent magnet disposed that one end face thereof is connected with the yoke, and the other end thereof is connected with the pole piece;
an electromagnet having a core and a coil enclosing the core wherein the electromagnet is disposed that one end face of the core is connected with the yoke and the other end face of the core is spaced a predetermined gap apart from the pole piece; and
an electromagnet control device for supplying electric current to the electromagnet;
wherein the electromagnet control device applies electric current to the coil such that the lines of magnetic force may be formed so as to return in the order(or reverse order) of the permanent magnet, the pole piece, the core, the yoke, and the permanent magnet when the magnetic substance is released from the holding face of the pole piece.

37. A magnetic substance holder including combination of a permanent magnet and an electromagnet comprising:
a yoke having a base plate and a side plate including a holding face for holding a magnetic substance;
a pole piece disposed inside the yoke and spaced apart from the yoke, and including a holding face for holding the magnetic substance;
a permanent magnet disposed between the yoke and the pole piece such that one of an N pole and an S pole thereof is in contact with one face of the pole piece, and the other is in contact with an inside face of the yoke;
an electromagnet having a core and a coil enclosing the core wherein the electromagnet is disposed between the yoke and the pole piece such that one end face of the core is in contact with the pole piece and the other end face of the core is spaced apart from the yoke with a gap in which lines of magnetic force emitting from the core are capable of moving to the yoke when the core is magnetized; and
an electromagnet control device for supplying electric current to the electromagnet;
wherein holding force being capable of holding the magnetic substance on the holding faces of the yoke and the pole piece is generated by magnetic force of the permanent magnet, and the holding force is removed from the holding faces of the yoke and the pole piece when the electromagnet control device supplies electric current to the electromagnet as to magnetize the one end of the core to an opposite pole to the pole of the permanent magnet contacted with the pole piece.

38. The magnetic substance holder including combination of a permanent magnet and an electromagnet according to claim 37, wherein the permanent magnet is contacted with a side face of the pole piece, and one end face of the core is contacted with a base face of the pole piece.

39. The magnetic substance holder including combination of a permanent magnet and an electromagnet according to claim 38, wherein the pole piece has a plurality of side faces, and a plurality of the permanent magnets are disposed between the respective side faces of the pole piece and an inside face of the yoke.

40. A magnetic substance holder including combination of a permanent magnet and an electromagnet comprising:
a yoke having a base plate and a side plate including a holding face for holding a magnetic substance;
a plurality of pole pieces disposed inside the yoke and spaced apart from the yoke;
an intermediate permanent magnet disposed such that an N pole thereof is in contact with one of two neighboring pole pieces of the plurality of the pole pieces, and an S pole thereof is in contact with the other;
a plurality of electromagnets having a core and a coil enclosing the core, wherein the plurality of electromagnets are disposed between the yoke and the pole piece, and one end of the core is in contact with the respective pole pieces and the other end of the core is spaced apart from the yoke with a gap in which lines of magnetic force emitting from the core are capable of moving to the yoke when the core is magnetized; and
an electromagnet control device supplying electric current to the respective electromagnets;
wherein holding force being capable of holding the magnetic substance on the holding faces of the yoke and the pole pieces is generated by magnetic force of the intermediate permanent magnet, and the holding force is removed from the holding faces of the yoke and the respective pole pieces when the electromagnet control device supplies electric current as to magnetize the one end of the respective core to an opposite pole to the pole of the intermediate permanent magnet contacted with the respective pole pieces contacted with the one end of the respective core.

41. The magnetic substance holder including combination of a permanent magnet and an electromagnet according to claim 40, wherein the magnetic substance holder further comprises:
a plurality of permanent magnets disposed between the respective pole pieces and an inside face of the yoke;
wherein magnetic poles of the permanent magnets which are in contact with each pole piece are the same as that of the intermediate permanent magnet which is in contact with each pole piece.

42. A magnetic substance holder including combination of a permanent magnet and an electromagnet comprising:
a yoke having a base plate and a side plate;
a first to a fourth pole pieces disposed inside the yoke and spaced apart from the yoke respectively, and having a holding face for holding a magnetic substance;
a first intermediate permanent magnet disposed that both ends thereof are in contact with the first pole piece and the second pole piece respectively;
a second intermediate permanent magnet disposed that both ends thereof are in contact with the third pole piece and the fourth pole piece respectively
a first electromagnet having a core and a coil enclosing the core, disposed between the first pole piece and the third pole piece such that one end thereof is in contact with one of the first pole piece and the third pole piece, and the other end thereof is spaced apart from the other with a gap in which lines of magnetic force emitting from the core are capable of moving to the other when the core is magnetized;
a second electromagnet having a core and a coil enclosing the core, disposed between the second pole piece and the fourth pole piece such that one end thereof is in contact with one of the second pole piece and the fourth pole piece, and the other end thereof is spaced apart from the other with a gap in which lines of magnetic force emitting from the core are capable of moving to the other when the core is magnetized; and
an electromagnet control device for supplying electric current to the respective electromagnets;
wherein holding force being capable of holding the magnetic substance on the holding faces of the respective pole pieces is generated by magnetic force of the respective intermediate permanent magnets, and the holding force is removed from the holding faces of the respective pole pieces when the electromagnet control device supplies electric current to the respective electromagnets as to magnetize both ends of the core to an opposite pole to the pole of the respective intermediate permanent magnets contacted with the respective pole pieces contacted with the core respectively.

43. The magnetic substance holder including combination of a permanent magnet and an electromagnet according to claim 42, wherein the magnetic substance holder further comprises:
a plurality of permanent magnets disposed that both ends thereof are in contact with the respective pole pieces and the yoke respectively;
wherein magnetic poles of the permanent magnets which are in contact with the respective pole pieces are the same as that of the intermediate permanent magnet which is in contact with the respective pole pieces contacted with the permanent magnets.

44. A magnetic substance holder including combination of a permanent magnet and an electromagnet comprising:
a yoke having a base plate, a side plate including a holding face for holding a magnetic substance, and an insertion recess;
a pole piece disposed inside the yoke and spaced apart from the yoke and having a holding face for holding the magnetic substance;
a permanent magnet disposed between the yoke and the pole piece such that one pole of an N pole and an S pole thereof is in contact with one end of the pole piece, and the other pole is in contact with an inside face of the yoke;
an electromagnet having a core and a coil enclosing the core wherein the core is allowed to move between the yoke and the pole piece in state that one end face thereof is inserted into the insertion recess in contact with the yoke ; and
an electromagnet control device supplying electric current to the electromagnet;
wherein holding force being capable of holding the magnetic substance on the holding faces of the yoke and the pole piece is generated by magnetic force of the permanent magnet, and the holding force is removed from the holding faces of the yoke and the pole piece when the core is moved to a middle of the coil to contact the other end of the core with the pole piece if the electromagnet control device supplies electric current to the electromagnet to magnetize the core.

45. The magnetic substance holder including combination of a permanent magnet and an electromagnet according to claim 44, wherein the magnetic substance holder further comprises:
a spring disposed between the pole piece and the core in order to apply elastic force to the core in a direction to which the core is separated from the yoke.

46. A magnetic substance holder including combination of a permanent magnet and an electromagnet comprising:
a yoke;
a plurality of pole pieces disposed inside the yoke and spaced apart from the yoke, and having a insertion recess and a holding face for holding a magnetic substance;
an intermediate permanent magnet disposed such that an N pole thereof is in contact with one of two neighboring pole pieces of the plurality of the permanent magnets, and an S pole thereof is in contact with the other;
a plurality of electromagnets having a core and a coil enclosing the core wherein the core is allowed to move between the yoke and the respective pole pieces in state that one end face thereof is inserted into the respective insertion recesses in contact with the respective pole pieces; and
an electromagnet control device for supplying electric current to the respective electromagnets;
wherein holding force being capable of holding the magnetic substance on the holding faces of the yoke and the respective pole pieces is generated by magnetic force of the intermediate permanent magnet, and the holding force is removed from the holding faces of the respective pole pieces when the respective cores are moved to a middle of the respective coils to contact the other ends of the respective cores with the yoke if the electromagnet control device supplies electric current to the respective electromagnets to magnetize the respective cores.

47. A magnetic substance holder including combination of a permanent magnet and an electromagnet comprising:
a yoke;
a plurality of pole pieces disposed inside the yoke and spaced apart from the yoke, and having a holding face for holding a magnetic substance;
an intermediate permanent magnet disposed such that an N pole thereof is in contact with one of two neighboring pole pieces of the plurality of the permanent magnets, and an S pole thereof is in contact with the other;
a plurality of electromagnets having a core and a coil enclosing the core wherein the plurality of electromagnets are disposed between the yoke and the pole piece, and one end of the core is in contact with the respective pole pieces and the other end of the core is in contact with the yoke; and
an electromagnet control device supplying electric current to the respective electromagnets;
wherein holding force being capable of holding the magnetic substance on the holding faces of the respective pole pieces is generated when the electromagnet control device supplies electric current to the respective electromagnets to magnetize the core such that a pole of one end of the respective cores become the same pole as the pole of the intermediate permanent magnet contacted with the respective pole pieces contacted with the one end of the core, and the holding force is removed from the holding faces of the respective pole pieces when the pole of one end of the respective cores become the opposite pole to the pole of the intermediate permanent magnet contacted with the respective pole pieces contacted with the one end of the core.

48. A magnetic substance holder including combination of a permanent magnet and an electromagnet comprising:
a first magnet module including: a first yoke; a pole piece disposed inside the first yoke and spaced apart from the first yoke and having a holding face; a permanent magnet disposed between the first yoke and the pole piece that one end thereof is in contact with one face of the pole piece and the other end thereof is in contact with the first yoke; and
a second magnet module including: an electromagnet having a core and a coil enclosing the core and including a holding face corresponding to the holding face of the pole piece on one end of the core; an electromagnet control device for supplying electric current to the electromagnet;
wherein the electromagnet control device applies electric current to the coil such that the lines of magnetic force may be formed on the core so as to return in the order(or reverse order) of the permanent magnet, the pole piece, the core, the first yoke, and the permanent magnet in case that the holding face of the pole piece and the holding face of the core are mutually held, and
wherein the electromagnet control device applies electric current to the coil to form the line of magnet force on the core in a direction to where the lines of magnetic force are not capable of passing through the core in case that mutual holding between the holding face of the pole piece and the holding face of the core is released.

49. A magnetic substance holder including combination of a permanent magnet and an electromagnet comprising:
a first magnet module including: a first yoke having a base plate and a side plate provided with a holding face for holding a magnetic substance; a pole piece disposed inside the first yoke and spaced apart from the first yoke and having a holding face; a permanent magnet disposed between the first yoke and the pole piece that one pole of an N pole and an S pole thereof is contacted with one face of the pole piece and the other pole thereof is contacted with an inside face of the first yoke; and
a second magnet module including: an electromagnet having a core and a coil enclosing the core and provided with a holding face corresponding to the holding face of the pole piece on one end of the core; an electromagnet control device for supplying electric current to the electromagnet;
wherein holding force is generated between the first magnet module and the second magnet module when the electromagnet control device doesn't supply electric current to the electromagnet, or when the electromagnet control device supplies electric current to the electromagnet to magnetize the holding face of the core to the opposite pole to the pole of the permanent magnet contacted with the pole piece, and
wherein the holding force is removed between the first magnet module and the second magnet module when the electromagnet control device supplies electric current to the electromagnet to magnetize the holding face of the core to the same pole as the pole of the permanent magnet contacted with the pole piece.

50. The magnetic substance holder including combination of a permanent magnet and an electromagnet according to claim 49, wherein the second magnet module further comprises a second yoke having a base plate and a side plate provided with a holding face corresponding to the holding face of the first yoke;
wherein the other end of the core is contacted with the second yoke.

51. A magnetic substance holder including combination of a permanent magnet and an electromagnet comprising:
a first magnet module including: a pair of pole pieces having a holding face; an intermediate permanent magnet disposed that an N pole thereof is contacted with one of the pair of pole pieces and an S pole thereof is contacted with the other; and
a second magnet module including: an electromagnet having a core provided with a holding face corresponding to the respective holding faces of the pair of pole pieces on both ends, and a coil enclosing the core; an electromagnet control device for supplying electric current to the electromagnet;
wherein holding force is generated between the first magnet module and the second magnet module when the electromagnet control device doesn't supply electric current to the electromagnet, or when the electromagnet control device supplies electric current to the electromagnet to magnetize both ends of the core to the opposite pole to the pole of the intermediate permanent magnet contacted with the pole piece facing to the both ends of the core, and
wherein the holding force is removed between the first magnet module and the second magnet module when the electromagnet control device supplies electric current to the electromagnet to magnetize the both ends of the core to the same pole as the pole of the intermediate permanent magnet contacted with the pole piece facing to the both ends of the core.

52. The magnetic substance holder including combination of a permanent magnet and an electromagnet according to claim 51, wherein the first magnet module further comprises a yoke having a base plate and a side plate;
wherein the pair of pole pieces combine with the yoke and space apart from the base plate of the yoke.

53. The magnetic substance holder including combination of a permanent magnet and an electromagnet according to claim 52, wherein the first magnet module further comprises: a pair of support members disposed between a bottom surface of the pair of pole pieces and the base plate of the yoke.

54. The magnetic substance holder including combination of a permanent magnet and an electromagnet according to claim 52, wherein the first magnet module further comprises a plurality of permanent magnets connecting the pair of pole pieces and the yoke;
wherein a pole of the respective permanent magnets, contacted with the respective pole pieces is same as that of the intermediate permanent magnet contacted with the pole piece contacted with the respective permanent magnet.

55. The magnetic substance holder including combination of a permanent magnet and an electromagnet according to claim 54, wherein the first magnet module further comprises: a plurality of auxiliary electromagnets having a core wherein both ends thereof is contacted with the respective pole pieces and the yoke, and a coil enclosing the core; and an electromagnet control device for supplying electric current to the auxiliary electromagnets;
wherein the electromagnet control device of the first magnet module supplies electric current to the respective auxiliary electromagnets to magnetize a pole of the both ends of the respective auxiliary electromagnets to become the same pole as the pole of the intermediate permanent magnet contacted with the respective pole pieces contacted with the both ends.

56. The magnetic substance holder including combination of a permanent magnet and an electromagnet according to claim 54, wherein the first magnet module further comprises: a plurality of auxiliary electromagnets having a core and a coil enclosing the core; and an electromagnet control device for supplying electric current to the auxiliary electromagnets;
wherein the core disposed that one end thereof is contacted with one of the pair of pole pieces, and the other end is contacted with the other, and
wherein the electromagnet control device of the first magnet module supplies electric current to the auxiliary electromagnets to magnetize a pole of the both ends of the auxiliary electromagnets to become the same pole as the pole of the intermediate permanent magnet contacted with the respective pole pieces respectively contacted with the both ends.

57. A magnetic substance holder including combination of a permanent magnet and an electromagnet comprising:
a first magnet module including: a yoke having a base plate and a side plate, a pair of pole pieces disposed inside the yoke and spaced apart from the yoke and having a holding face; a plurality of permanent magnets connecting the respective pole pieces and the yoke; an auxiliary electromagnet having a core and a coil enclosing the core wherein one end thereof is in contact with one of the pair of the pole pieces and the other end is in contact with the other of the pair of the pole pieces; and an electromagnet control device for supplying electric current to the auxiliary electromagnet; and
a second magnet module including: an electromagnet having a core including holding faces corresponding to the respective holding faces of the pair of the pole pieces at opposite ends thereof; and an electromagnet control device for supplying electric current to the electromagnet;
wherein a pole of the permanent magnet contacted with one of the pair of the pole pieces is opposite to a pole of the permanent magnet contacted with the other of the pair of the pole pieces,
wherein the electromagnet control device of the first magnet module supplies electric current to the auxiliary electromagnet to magnetize the opposite ends of the core of the auxiliary electromagnet to the same pole as the pole of the respective permanent magnets contacted with the opposite ends of the core of the auxiliary electromagnet respectively, and
wherein holding force is generated between the first magnet module and the second magnet module when the electromagnet control device does not supply electric current to the electromagnet or when the electromagnet control device supplies electric current to the electromagnet to magnetize the opposite ends of the core of the auxiliary electromagnet to the opposite pole to the pole of the respective permanent magnets contacted with the opposite ends of the core of the auxiliary electromagnet respectively, and the holding force is removed between the first magnet module and the second magnet module when the electromagnet control device of the second magnet module supplies electric current to the electromagnet to magnetize the opposite ends of the core of the electromagnet to the same pole as the pole of the respective permanent magnets contacted with the opposite ends of the core of the electromagnet respectively.
